# EUROPEAN PATENT SPECIFICATION

(11) **EP 2 794 268 B1**
(45) Date of publication and mention of the grant of the patent: **17.08.2022**
(21) Application number: 12809995.9
(22) Date of filing: 19.12.2012
(51) Int. Cl.: B32B 27/08, B32B 27/20, B65D 75/00, B65D 81/34

(54) **EASY-OPEN COOK-IN PACKAGED PRODUCT**
LEICHT ZU ÖFFNENDE KOCHPRODUKTVERPACKUNG
PRODUIT EMBALLÉ POUR CUISSON AVEC OUVERTURE FACILE

(30) Priority: 20.12.2011 US 201113331375
(43) Date of publication of application: 29.10.2014
(73) Proprietor: Cryovac, LLC, Charlotte, NC 28208 (US)
(72) Inventor: RANGANATHAN, Sumita, S., Simpsonville, SC 29681 (US); HODGSON, Rodney, R., Greenville, SC 29611 (US); ROSINSKI, Michael, J., Woodruff, SC 29388 (US); WATSON, Richard, K., Simpsonville, SC 29681 (US); TROUTT, Terry, L., Moore, SC 29369 (US); FINLEY, David, M., Simpsonville, SC 29681 (US); HUERTA, Diana, L., Duncan, SC 29334 (US)
(74) Representative: Uexküll & Stolberg
(86) International application number: PCT/US2012/070530
(87) International publication number: WO 2013/096400

(56) References cited:
- US-A1- 2005 244 664
- US-A1- 2008 292 225
- US-A1- 2009 116 768

## Description

### Field

The present invention pertains to cook-in packaged products, particularly cook-in packages comprising cooked meat products packaged under vacuum with a film adhered to the meat product.

### Background

For several decades, meat has been vacuum packaged in packaging articles made from thermoplastic film. While fresh meat is frequently vacuum packaged, vacuum packaging is also used for "cook-in" applications, i.e., with the meat being cooked while it remains in the package. Cook-in films preferably have a tendency for adhesion to the food product, thereby preventing "cook-out", i.e., "purge", which is the collection of juices between the outer surface of the food product and the meat-contact surface of the film, i.e., the surface in direct contact with the meat. This meat adhesion characteristic of the meat contact layer serves to both prevent cook-out (and thereby prevent an unattractive package or the need to strip the film from the meat and repackage the meat), to increase product yield, and to prevent the meat from losing juices which improve its edible character. As used herein, the term "adhere", with respect to meat-adhesion, refers to a meat-contact surface of the film which bonds to the contained meat product during cook-in, the bonding occurring to an extent sufficient to substantially reduce or prevent accumulation of fluids between the film and the contained meat product.

Some cook-in products have the package stripped from the product after cooking (i.e., "cook-and-strip" packaging), other cook-in products remain in the cook-in packaging article while shipped to the retailer or consumer (i.e., "cook-and-ship" packaging). In order to increase the shelf life the product, the film can be provided with a layer which is recognized as providing a barrier to atmospheric oxygen.

Cook-in meat packaging requires seal layers with relatively high melting points, as the cook-in temperatures are capable of causing seals to fail during cooking if the polymer of the seal layer has a low melting point. Moreover, as meat products are relatively dense, and the packages relatively heavy, the film needs to be relatively strong to withstand the processing, handling, and transport of the product. Cook-in packaging articles generally have high puncture resistance and high impact strength. As a result, cook-in meat packages are frequently difficult to open.

The opening of cook-in meat packaging articles is made more difficult by the adhesion of the inside surface of the packaging article to the meat product during cook-in, i.e., the adhesion described above. The opening of such tough packaging requires more time and effort due to the toughness of the packaging article, and can also result in damage to the product inside the package. The marketplace desires a tough cook-in packaging article that can be opened quickly and easily, so that the cooked meat product can be easily removed from the packaging article, without damage to the product or injury to a person opening the package.

US 2005/244664 A1, which can be regarded as the closest prior art, describes multilayer films comprising polyamide that may be used for food packaging. Moreover, US 2008/292225 A1 describes heat-shrinkable packaging articles that are easy to open and may also be used for food packaging.

### Summary

It has been found that cook-in films tend to delaminate as they are stripped from the meat product during the opening of the package and the removal of the meat product from the package. The delamination has been found to be at the interface between the seal layer and a tie layer which is adjacent the seal layer. This delamination can result in pieces of film remaining on portions of the meat product. Of course, this is undesirable because the meat product should be free of the film when the meat is removed from the package.

Attempts were made to solve the delamination problem by selecting a tie layer composition that bonds more strongly with the seal layer, so that the film would not delaminate upon the opening of the package and the peeling of the film off of the meat product. However, increasing the degree of adhesion between the seal layer and the tie layer did not prove to be successful in overcoming the delamination problem.

It was surprisingly discovered that by making the film tear more easily down the length of the package, the delamination problem could be eliminated. Thus, it became apparent that the adhesion of the film to the meat product was not the primary cause of film delamination during the opening of the package. Providing the film with a lower tear force was accomplished by providing the film with at least one layer comprising an incompatible polymer blend. By making the film easier to tear, less stretching force had to be applied to the film in order tear the package open. It is believed that it is the high stretching force required for a high force-to-tear film that caused or enhanced the delamination problem. Thus, the delamination problem was solved by providing a film with a reduced tear force. Of course, delamination could still occur if the bond strength between the seal layer and the tie layer is low enough.

A first aspect is directed to a cook-in packaged product comprising an easy-open packaging article including a multilayer film surrounding and adhering to a cooked meat product. The packaging article has a heat seal of the inside surface of the film to itself. The multilayer film comprises a first layer that is an inside seal layer. The first layer comprises at least one member selected from the group consisting of (i) ionomer resin that bonds to ethylene homopolymer with a bond strength of less than 14 grams per cm (36 grams per inch), (ii) polyamide, and (iii) polyester. The multilayer film further comprises a second layer that bonds to the first layer with a bond strength of at least 14 grams per cm (36 grams per inch), wherein the second layer is a tie layer. In the multilayer film, the third layer with the second layer being between the first layer and the third layer, comprises a tear-enhancing component comprising an incompatible polymer blend and optionally an inorganic filler.

The filler can be present in an amount of at least 5 weight percent, based on layer weight, and the filler can comprise at least one member selected from the group consisting of silicate, silica, siloxane, silicone resin, zinc sulfide, wollastonite, microspheres, glass fiber, metal oxide, calcium carbonate, sulfate, aluminum trihydrate, feldspar, perlite, gypsum, iron, fluoropolymer, crosslinked polymethylmethacrylate, talc, diatomaceous earth, zeolite, mica, kaolin, carbon black, and graphite. The third layer containing the filler (or any other layer containing the filler) makes up at least 10 weight percent of the film, based on total film weight.

The incompatible polymer blend comprises at least one member selected from the group consisting of: (i) a blend of from 90 to 30 weight percent ethylene homopolymer and/or ethylene/alpha-olefin copolymer with from 10 to 70 weight percent ethylene/unsaturated ester copolymer having an unsaturated ester content of at least 10 weight percent; (ii) a blend of ionomer resin with ethylene/unsaturated ester copolymer, and/or polybutylene, and/or propylene homopolymer and/or propylene copolymer; (iii) a blend of homogeneous ethylene/alpha-olefin copolymer with recycled polymer blend comprising ethylene homopolymer, propylene homopolymer, ethylene copolymer, propylene copolymer, polyamide, ethylene/vinyl alcohol copolymer, ionomer resin, anhydride-modified ethylene/alpha-olefin copolymer, and/or antiblock; (iv) a blend of from 10 to 75 weight percent ethylene/unsaturated ester copolymer with from 90 to 15 weight percent polypropylene and/or propylene/ethylene copolymer, and/or polybutylene, and/or modified ethylene/alphaolefin copolymer, and/or styrene homopolymer, and/or styrene/butadiene copolymer; (v) a blend of ethylene/norbornene copolymer with ethylene/unsaturated ester copolymer and/or polypropylene and/or polybutylene; (vi) a blend of from 90 to 15 weight percent ethylene/alpha-olefin copolymer with from 10 to 75 weight percent polypropylene and/or polybutylene and/or ethylene/norbornene; (vii) a blend of from 90 to 25 weight percent homogeneous propylene homopolymer and/or homogeneous propylene copolymer with from 10 to 75 weight percent homogeneous ethylene/alpha-olefin copolymer and/or ethylene/unsaturated ester copolymer; (viii) a blend of propylene homopolymer and/or propylene/ethylene copolymer and/or polybutylene with ethylene/methyl acrylate copolymer and/or ethylene/acrylic acid copolymer and/or ethylene/butyl acrylate copolymer; (ix) a blend of polyamide with polystyrene and/or ethylene/alpha-olefin copolymer and/or ethylene/vinyl acetate copolymer and/or styrene/butadiene copolymer; and (x) a blend of polyamide 6 and polyamide 6I/6T. The at least one incompatible polymer blend is present in at least one layer of the multilayer filrr The at least one incompatible polymer blend makes up at least 20 weight percent of the film, based on total film weight.

According to the invention, the second layer is a tie layer and the third layer comprises the incompatible polymer blend.

In an embodiment, the second layer bonds to the first layer at a bond strength of 14.2 to 54.3 g/cm (36 to 138 grams per inch). In another embodiment, the second layer bonds to the first layer at a bond strength of at least 54.7 g/cm (139 grams per inch). In another embodiment, the second layer bonds to the first layer at a bond strength of from 54.7 to 267.7 g/cm (139 to 680 grams per inch).

In an embodiment, the second layer is a first tie layer, the third layer comprises the incompatible polymer blend, and the multilayer film further comprises a fourth layer that is a second tie layer and a fifth layer that is an O₂-barrier layer, with the fifth layer comprising at least one member selected from the group consisting of saponified ethylene/vinyl acetate copolymer, polyvinylidene chloride, polyamide 6I/6T, polyamide MXD6, polyester, and polyacrylonitrile. The fourth layer is between the third layer and the fifth layer. In a further embodiment, the multilayer film further comprises a sixth layer that is a third tie layer and a seventh layer that is an outside layer of the packaging article, with the sixth layer being between the fifth layer and the seventh layer. The seventh layer can comprise any thermoplastic polymer that provides the desired abuse properties. Such polymers include olefin homopolymer, olefin copolymer, polyamide, polyester, and polyurethane. In a further embodiment, the third layer comprises the incompatible polymer blend, and the multilayer film further comprises an eighth layer that also comprises the incompatible polymer blend, with the eighth layer being between the seventh layer and the sixth layer, the eighth layer comprising at least one member selected from the group consisting of the same group of incompatible polymer blend (i) through (x) above.

In an embodiment, the packaging article further comprises a skirt extending outward from the first heat seal, the skirt having a tear initiator therein. In a further embodiment, the skirt has a first lay-flat side and a second lay-flat side, and the tear initiator comprises a first tear initiator through the first lay-flat side and a second tear initiator through the second lay-flat side, with the first and second tear initiators being coincident with one another, and the skirt further comprises (A) a first grip-assister comprising a first passageway through the first lay-flat side of the skirt and a first passageway through a second lay-flat side of the skirt, with the first passageways being coincident with one another, and (B) a second grip-assister comprising a second passageway through the first lay-flat side of the skirt and a second passageway through the second lay-flat side of the skirt, with the second passageways being coincident with one another, with the tear initiators being between the first and second grip-assisters. In a further embodiment, the heat seal is a first heat seal and the first lay-flat side of the skirt is heat sealed to itself at a second heat seal, and the incompatible polymer blend is present in the film in an amount of from 40 to 60 weight percent, based on total film weight.

In an embodiment, the packaging article comprises a seamless tubing and the heat seal is a first heat seal on a first end of the packaging article, with the packaging article further comprising a closure on a second end of the packaging article, the closure comprising a member selected from the group consisting of a heat seal and a clip.

In an embodiment, the packaging article further comprises a skirt extending outward from the first heat seal, the skirt having a tear initiator therein. In a further embodiment, the skirt has a first lay-flat side and a second lay-flat side, and the tear initiator comprises a first tear initiator through the first lay-flat side and a second tear initiator through the second lay-flat side, with the first and second tear initiators being coincident with one another. In a further embodiment, the skirt further comprises (A) a first grip-assister comprising a first passageway through the first lay-flat side of the skirt and a first passageway through a second lay-flat side of the skirt, with the first passageways being coincident with one another, and a second grip-assister comprising a second passageway through the first lay-flat side of the skirt and a second passageway through the second lay-flat side of the skirt, with the second passageways being coincident with one another, with the tear initiators being between the first and second grip-assisters, and the heat seal is a first heat seal and the first lay-flat side of the skirt is heat sealed to itself at a second heat seal, and the incompatible polymer blend is present in the film in an amount of from 40 to 60 weight percent, based on total film weight.

In another embodiment, the heat seal is a first heat seal and the first lay-flat side of the skirt is heat sealed to itself at a second heat seal which is outward of the first heat seal.

In another embodiment, the skirt further comprises a first stabilizing slit on a first side of the tear initiators and a second stabilizing slit on a second side of the tear initiators, the first stabilizing slit comprising a first slit through the first lay-flat side of the skirt and a first slit through the second lay-flat side of the skirt, the first slits being coincident with one another, and the second stabilizing slit comprising a second slit through the first lay-flat side of the skirt and a second slit through the second lay-flat side of the skirt, the second slits being coincident with one another, with the tear initiator and the first and second grip-assisters all being between the first stabilizing slit and the second stabilizing slit. Stabilizing slits are used with heat-shrinkable films as they reduce the tendency of the tear initiation slits to open up as the film shrinks against the meat product, and they enhance the ability of a consumer to detect and utilize the grip and tear easy open feature of the package.

In an embodiment, the at least one incompatible polymer blend is present in at least one layer of the multilayer film, and the at least one incompatible polymer blend makes up at least 30 to 70 weight percent of the film, based on total film weight. In an embodiment, the at least one incompatible polymer blend is present in at least one layer of the multilayer film, and the at least one incompatible polymer blend makes up at least 40 to 60 weight percent of the film, based on total film weight.

### Brief Description of the Drawings

FIG. 1 is a schematic of a preferred heat-shrinkable packaging article in lay-flat configuration, before the meat product is placed into the packaging article and before the packaging article is shrunk around the meat product.
FIGs. 2A and 2B illustrate perspective views of a preferred embodiment of a packaged product in accordance with the invention.
FIG. 3 is a perspective view of a product packaged in a preferred packaging article of the invention, with the packaging article being manually gripped at the grip-assisters, in preparation for manual tearing open for removal of the product.
FIG. 4 is a perspective view of a product packaged of FIG. 3 as the packaging article is being torn open.
FIG. 5 is a perspective view of a product packaged in a comparative packaging article as the packaging article is being torn open, with the packaging article undergoing delamination during the manual tearing of the packaging article.
FIG. 6 is a perspective view of an alternative packaged product in accordance with the invention.
FIG. 7 is a perspective view of an alternative packaged product in accordance with the invention.
FIG. 8 is a schematic of a preferred process for making a heat-shrinkable film for use in a preferred packaging article.

### Detailed Description

As used herein, the phrase "packaged product" refers to a product that is partially or entirely surrounded by a packaging article, such as a film. As used herein, the term "meat" includes beef, pork, and poultry.

As used herein, the phrase "packaging article" refers to the article that partially or entirely surrounds the meat product being packaged. The packaging article can be a single piece of film sealed to itself, such as an end-seal bags and side-seal bags (both of which are produced from seamless film tubing), or an L-seal bag. An end-seal bag has an open top, folded side edges, and a transverse heat seal across the bottom of the bag, and usually has a skirt below the transverse heat seal. End-seal bags are produced by sealing across a seamless tubing and thereafter cutting the bag free of the tubing. A side-seal bag has an open top, a folded bottom edge, and side seals down each of the bag side edges, and usually has skirts outward of each of the side seals. Side-seal bags are produced by making two transverse seals across a seamless tubing, with the distance between the seals corresponding with the width of the interior of the bag. Thereafter, the tubing is slit lengthwise down one folded side edge to form the open bag top, with the bag then being cut free of the remainder of the tubing. L-seal bags are made by folding a flat piece of film in half and sealing along two sides to leave an open top, one folded side edge, one sealed side edge, and a sealed bottom edge. Alternatively, the packaging article can be a pouch, which is made from two separate pieces of film sealed to one another along three side edges, leaving the fourth side edge unsealed. Finally, the packaging article can have components in addition to the film, e.g., a tray, etc.

The phrase "cook-in" as used herein refers to the process of cooking a product packaged in a material capable of withstanding exposure to long and slow cooking conditions while containing the food product, for example cooking at 57°C to 121°C (i.e., 135°F-250°F) for 2-12 hours, preferably 57°C to 95°C (i.e., 135°F to 203°F) for 2-12 hours. Cook-in packaged foods are essentially pre-packaged, precooked foods which may be directly transferred to the consumer in this form. These types of foods may be consumed with or without warming. Cook-in packaging materials maintain seal integrity, i.e., any heat sealed seams should resist being pulled apart during cook-in, and are conformable to the contained food product. In an embodiment, conformability is enhanced by the film being heat-shrinkable so as to shrink tightly against the product. Additional optional characteristics of films for use in cook-in applications include delamination-resistance, low O₂-permeability, and optical clarity.

As used herein, the phrase "lay-flat" is applied to a packaging article that is made from a film tubing, etc. that can be placed in a flattened configuration. More particularly, a segment of seamless tubing of film of defined length can be placed on a flat horizontal surface and placed into a flattened configuration thereon. This tubing has a first end, a second end, a first folded side edge, a second folded side edge, a first lay-flat side (i.e., half of the film tubing), and a second lay-flat side (the other half of the film tubing), a lay-flat width. The segment of seamless tubing also has a length running in a machine direction and a width running in a transverse direction. If a heat seal is made across the tubing to close the tubing near one end, with a skirt being outward of the heat seal, the skirt also has a first lay-flat side and a second lay-flat side.

As used herein, the term "heat seal" refers to a heat seal of a first region of a film to a second region of the film, or a heat seal of a first region of the film to region of a second film or to a region of a non-film portion of a packaging article. Heat seals are generally made by applying enough heat with enough pressure for enough time to cause the regions of the films to fuse, i.e., bond, to one another. Heat seals can be made using equipment and processes such as are described in, for example Canadian Patent No. 2,296,387, US Pub. No. 2007/0227102, US Patent No. 4,229,244, and US Patent No. 7,262,389.

As used herein, the phrase "outward of the heat seal" refers to a position on a side of a heat seal that is away from the product, i.e., on the opposite side of the heat seal from the product. Similarly, the phrase "inward of the heat seal" refers to a position on the same side of the heat seal as position of the product relative to the heat seal. The terms "skirt" and "header" are used interchangeably and refer to that portion of a packaging article extending outward of the heat seal.

As used herein, the term "film" is inclusive of plastic web, regardless of whether it is film or sheet. The film can have a total thickness of 0.25 mm or less, or a thickness of from 25.4 to 254 µm (1 to 10 mils), or from 25.4 to 127 µm (1 to 5 mils), or from 30.5 to 127 µm (1.2 to 5 mils), or from 33.0 to 101.6 µm (1.3 to 4 mils), or from 35.6 (1.4) to from 30.5 to 76.2 µm (1.2 mils to 3 mils), or from 38.1 to 63.5 µm (1.5 to 2.5 mils), or from 43.2 to 55.9 µm (1.7 mils to 2.2 mils). If the film is heat-shrinkable, film thickness is determined before the film undergoes shrinking.

As used herein, the phrase "outer layer" refers to any film layer having less than two of its principal surfaces directly adhered to another layer of the film. Every multilayer film has two outer layers, each of which has a principal surface adhered to only one other layer of the multilayer film. As used herein, the phrase "inside layer" refers to the outer film layer making up the inside layer of the packaging article which is the seal layer and is also the layer in contact with the meat product. The other outer layer of the packaging article is referred to as the "outside layer" and/or as the "outer abuse layer" or "outer skin layer", as it is the outside layer of the packaging article and is the film layer furthest from the product, relative to the other layers of the multilayer film. Likewise, the "outside surface" of a packaging article (i.e., bag) is the surface away from the product being packaged within the article.

As used herein, the phrase "machine direction" refers to the direction in which the film emerges from the die. Of course, this direction corresponds with the direction the extrudate is forwarded during the film production process. The phrase "machine direction" corresponds with "longitudinal direction". Machine direction and longitudinal direction are abbreviated as "MD" and "LD", respectfully.

As used herein, the phrase "transverse direction" refers to a direction perpendicular to the machine direction. Transverse direction is abbreviated as "TD".

The multilayer film for use in the cook-in packaged product of the present invention can be heat-shrinkable or non-heat-shrinkable. As used herein, "heat-shrinkable" refers to a film exhibiting a total free shrink (i.e., machine direction shrink plus transverse direction shrink) of greater than 10 percent at 85°C. Hot blown films have a total free shrink at 85°C of up to 10 percent at 85°C. Films that are heat-shrinkable are heated to their softening point and then oriented while in the solid state. A preferred film for use in the present invention has a total free shrink at 85°C of from 20 percent to 120 percent, or a total free shrink at 85°C of from 30 percent to 105 percent, or a total free shrink at 85°C of from 40 percent to 100 percent. Free shrink is measured in accordance with ASTM D 2732.

As used herein, tear propagation is measured according to Elmendorf Tear Strength Test - ASTM D 1922 Plastic Test Standard. This test measures the average force required to propagate tearing through a specified length of plastic film. In an embodiment, the film exhibits an Elmendorf tear strength in at least one direction (i.e., in at least the machine direction or the transverse direction) of at least 0.7 Newton ("N"). The film can have an Elmendorf tear strength of at least 0.7 N to 2 N, or 0.7 N to 1.5 N, or 0.9 N to 1.3 N, or 1 N to 1.2 N, or 0.95 N to 1.15 N. If the film is heat-shrinkable, the tear strength is measured before shrinking. The film from which packaging article is made is designed to be opened using a manual tearing operation.

The film can have a tear propagation in a machine direction, of at least 0.7 Newton, or 0.7 Newton to 2 Newtons, or 0.7 Newton to 1.5 Newtons, or 0.9 Newton to 1.3 Newtons, or 1 Newton to 1.2 Newtons, or 0.95 Newtons to 1.15 Newtons. Tear propagation resistance can be measured in accordance with ASTM D1938-08. If the film is heat-shrinkable, tear propagation is measured before shrinking.

In an embodiment, the multilayer film exhibits a Peak Load Impact Strength, determined using ASTM D 3763-95A, of at least 1.97 N/µm (50 Newtons per mil); in another embodiment from 1.97 to 9.84 N/µm (50 to 250 Newtons per mil). Peak Load Impact Strength is measured using ASTM D 3763-95A.

The first layer is the inside layer of the packaging article and serves as a seal layer in that it is heat sealed to itself, and as a meat-contact and meat-adhesion layer. The first layer comprises polyamide, polyester, and ionomer resin that bonds to ethylene homopolymer with a bond strength of less than 36 grams per inch. The heat seal must be capable of surviving the cook-in process.

Polyamides suitable for use in the first layer include polyamide 6, polyamide 9, polyamide 10, polyamide 11, polyamide 12, polyamide 66, and polyamide 6/66, polyamide 6/12, polyamide 6/69, polyamide 6I/6T, copolyamide 66/69/61, copolyamide 66/610, polyamide MXD6, polyamide MXDI, polyamide 66/610, amorphous polyamide, and polyether block amide copolymer, either alone or blends of two or more of the above. In an embodiment, the first layer comprises polyamide having a melting point of from about 127°C to 204°C (260°F to 400°F), or from about 135°C to 191°C (275°F to 375°F), or from about 149°C to 182°C (300°F to 360°F), or from about 149°C to about 174°C (300°F to about 345° F). A blend of 50 wt % polyamide 12 with 50 wt. % polyamide 6/12 is a preferred blend for use in the seal layer.

In an embodiment, the first layer has a thickness of from about 3 to 20 percent, based on the total thickness of the multilayer film, or from 5 to 18 percent, or from 7 to 16 percent, or from 9 to 13 percent. In an embodiment, the first layer has a thickness of from about 1.27 to 50.8 µm (0.05 to 2 mils), or from 2.54 to 25.4 µm (0.1 to 1 mil), or from 5.08 to 20.32 µm (0.2 to 0.8 mil), or from 5.08 to 10.16 µm (0.2 to 0.4 mil), or from 5.08 to 7.62 µm (0.2 to 0.3 mil).

As used herein, the phrase "ionomer resin that bonds to ethylene homopolymer with a bond strength of less than 14.2 g/cm (36 grams per inch)" refers to metal salts of copolymers of ethylene and methacrylic acid in which the methacrylic acid mer content is relatively high and the degree of metal neutralization of the acid is relatively high. Examples of such ionomer resins include Surlyn^{®} 1702 ionomer resin and Surlyn^{®} 1705 ionomer resin, available from DuPont.

As used herein, the phrase "tie layer" refers to any film layer that serves to adhere two film layers to one another, which layers would otherwise not adhere to one another, or would not adhere to one another with sufficient bond strength.

In the cook-in packaged product of the invention, the second layer of the multilayer film is a tie layer. In other embodiments, the second, fourth, and sixth layers are tie layers. Tie layers should have a relatively high degree of bonding to relatively polar polymers, such as ethylene/vinyl alcohol copolymer, polyamide, polyester, as well as relatively non-polar polymers, such as olefin polymers. The tie layers can have a thickness of from 1.27 to 50.8 µm (0.05 to 2 mils), or from 1.27 to 12.7 µm (0.05 to 0.5 mil), or from 2.54 to 7.62 µm (0.1 to 0.3 mil) or from 3.05 to 4.32 µm (0.12 to 0.17 mils). Tie layer polymers include anhydride-grafted ethylene/alphaolefin copolymer, anhydride-grafted ethylene/unsaturated ester copolymer, anhydride-grafted ethylene/unsaturated acid copolymer, and polyurethane.

In an embodiment, only one layer of the multilayer film comprises an incompatible polymer blend. In another embodiment, two or more layers of the multilayer film comprise an incompatible polymer blend. The incompatible polymer blend allows the film to be easily torn in the machine direction (MD) down the length of the package, or easily torn in the transverse direction (TD) across the width of the packaging article. The incompatible polymer blend also allows the film to be easily torn (in MD or TD) after the film has been shrunk around the product. The incompatible polymer blend can be present in the film in an amount of at least 10 percent based on total film weight, or at least 20 percent based on total film weight, or from 20 to 95 percent based on total film weight, or from 30 to 70 percent based on total film weight, or from 40 to 60 percent based on total film weight.

Incompatible polymer blends include, but are not limited to, the group of incompatible polymer blends (i) through (x) above. Incompatible polymer blends are disclosed in U.S.S.N. 12/313,396, published as US 2009/0116768 A1. Different incompatible polymer blends can be used in different film layers.

As used herein, the term "barrier", and the phrase "barrier layer", as applied to films and/or film layers, are used with reference to the ability of a film or film layer to serve as a barrier to one or more gases. The multilayer film used to make the packaged product can optionally comprise a barrier layer. In the packaging art, oxygen (i.e., gaseous O₂) barrier layers can comprise, for example, at least one member selected from the group consisting of hydrolyzed ethylene/vinyl acetate copolymer (designated by the abbreviations "EVOH" and "HEVA", and also referred to as "saponified ethylene/vinyl acetate copolymer" and "ethylene/vinyl alcohol copolymer"), polyvinylidene chloride, amorphous polyamide, polyamide MXD6 (particularly MXD6/MXDI copolymer), polyester, polyacrylonitrile, etc., as known to those of skill in the art.

In an embodiment, the multilayer film exhibits an O₂-transmission rate of from 1 to 20 cc/m² day atm at 23°C and 100% relative humidity, or from 2 to 15 cc/m² day atm at 23°C and 100% relative humidity, or from 3 to 12 cc/m² day atm at 23°C and 100% relative humidity, or from 4 to 10 cc/m² day atm at 23°C and 100% relative humidity. Alternatively, the multilayer film can exhibit an O₂-transmission rate of from 21 cc/m² day atm to 15,000 cc/m² day atm, or from 500 cc/m² day atm to 10,000 cc/m² day atm, or from 2000 cc/m² day atm to 6,000 cc/m² day atm. O₂-transmission rate can be measured in accordance with ASTM-D-3985.

The outside layer of the packaging article contributes to the desired abuse and gloss characteristics, and preferably comprises a polymer having relatively low cost while providing these characteristics. Preferably, the outside layer has a thickness of from about 2.54 to 76.2 µm (0.1 to 3 mils); more preferably, from 2.54 to 50.8 µm (0.1 to 2 mils); still more preferably, from 2.54 to 12.7 (0.1 to 0.5 mil); and yet still more preferably, from about 2.54 to 7.62 µm (0.1 to 0.3 mil). The outside layer can comprise at least one member selected from the group consisting of polyolefin (ethylene homopolymer and copolymer, high density polyethylene, ethylene/alpha-olefin copolymer, linear low density polyethylene, propylene homopolymer and copolymer, butene homopolymer and copolymer), propylene/alpha-olefin copolymer, ethylene/unsaturated ester copolymer (ethylene/vinyl acetate copolymer), ethylene/unsaturated acid copolymer, polyamide, polyester, starch-containing polymer, polystyrene, and polyurethane.

Various multilayer film structures are suitable for use as the multilayer film in the packaged product, such as the following layer arrangements, in which "/" represents layer interface, "&" represents blended components in the same layer, "IPB" represents incompatible polymer blend, and "barrier" represents O₂-barrier layer:
seal / tie & IPB (not according to invention)
seal / tie / IPB
seal / tie / IPB / tie / barrier
seal / tie / IPB / tie / barrier / tie / outer
seal / tie / IPB / tie / barrier / tie / IPB / outer
seal / tie & IPB / barrier / tie & IPB / outer (not according to invention)
seal / tie & IPB / tie / barrier / tie & IPB / outer (not according to invention)
seal / tie & IPB / barrier / tie / outer (not according to invention)
seal / tie / barrier / tie & IPB / outer (not according to invention)
seal / tie / barrier / tie / IPB / outer
In any of the layer arrangements above, the IPB-containing layers can contain filler particles as described herein in order to provide the layer with enhanced tear properties, i.e., allowing a machine-direction tear down the length of the packaging article, or a transverse-direction tear across the width of the article, without delamination of the film, which is adhered to the cooked meat product.

The phrase "tear initiator", as used herein, refers to any one or more of a variety of means that can be located in the skirt or header of a packaging article. The tear initiator allows manual tearing force to be concentrated on a point or small region of the film(s), so that tear initiation and tear propagation can be produced manually. The tear initiators used in the packaging article include a cut through the film. The cuts can be in the form of slits or notches. Slit-type tear initiators can be straight or curved, with or without inflection points. A slit can be continuous or present as a line of discontinuous cuts or perforations. The slit can extend to the edge of the skirt or header, or have ends within the skirt or the header. A tear initiator can also be provided by cutting only part way through the thickness of the film, providing a line of weakness along which the remainder of the film thickness can be manually torn through. Alternatively, the tear initiator can be a notch in a bag skirt or header of the package. Tear initiators are illustrated and described in U.S.S.N. 12/313,396 ( see U.S. Pub. No. 2009/0116768), to Huerta et al, entitled "Easy-Opening Packaging Article Made From Heat-Shrinkable Film Exhibiting Directional Tear".

In an embodiment, the first and second tear initiators on the respective first and second lay-flat sides of the skirt or header are coincident with one another, i.e. the tear initiators are aligned one directly on top of the other when the lay-flat sides of the skirt or header are brought together. In this manner, manual tearing by grasping the skirt or header produces two tears, i.e., one extending from each of the tear initiators on each of the lay-flat sides of the skirt or header.

In an embodiment, the packaging article does not have a line of weakening (e.g., scoring) along a tear path extending from the tear initiator. In this manner, the film remains strong throughout the region in which the manual tearing is to take place. In contrast to the tear path down the length of the packaging article, the one or more tear initiator, or one or more portions of the tear initiators, can comprise a line of weakness.

In an embodiment, the packaging article is also provided with one or more grip-assisters as is also described and illustrated in U.S.S.N. 12/313,396. The grip-assister can enhance the ease with which the film can be torn. The grip-assister can be in one lay-flat side of the packaging article or in both lay-flat sides of the packaging article. The grip-assister can be a hole in the skirt (and/or in the header), an integral extension of the skirt or header, or a separate film tab fastened to the skirt or header. The separate film tab can be made from a thermoplastic polymer, paper, or other material, and can be heat-shrinkable or non-heat-shrinkable. The packaging article can be provided with the combination of a tear-initiator and a grip-assister.

In an embodiment, the first heat seal is of a first region of the inside surface to a second region of the inside surface. In another embodiment, the first heat seal is of a first region of the inside surface to a first region of the outside surface. The first heat seal can be straight or curved.

In an embodiment, the second heat seal is a curved seal. For example, a transverse second heat seal that curves outwardly to provide an interior volume longest in the center of the bag is a preferred transverse seal for the packaging of products such as whole turkeys.

In an embodiment, no portion of the inside surface of the film is sealed to itself along film edges defining the first and second tear initiators. That is, the inward and outward ends of first and second tear initiators are between the first and second heat seals. In an embodiment, the first and second tear initiators pass through the second heat seal and to the bottom edge of the packaging article.

In an embodiment, the bottom edge of the packaging article is outward of the second heat seal. In another embodiment, the second heat seal includes the bottom edge of the packaging article. The first and second heat seals can be straight or curved.

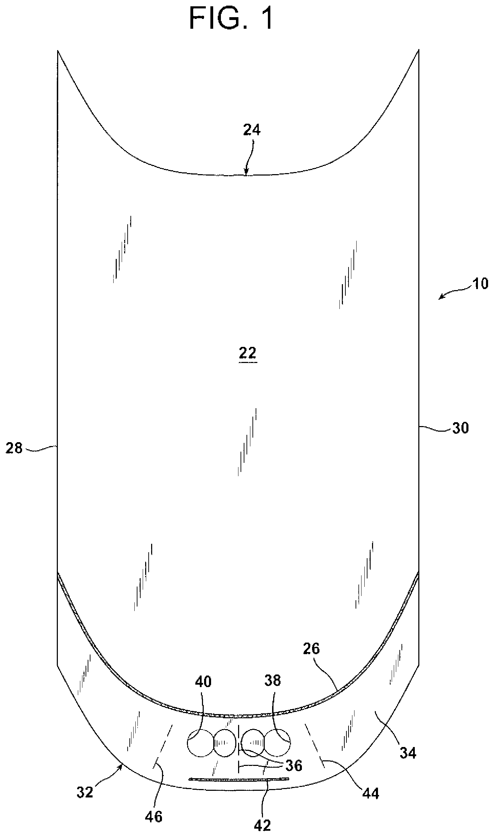

FIG. 1 is a schematic of preferred packaging article 10 in lay-flat configuration, before the meat product is placed into the packaging article and before the packaging article is shrunk around the meat product. Packaging article 10 is an end-seal bag made from a seamless tubing of film 22. Packaging article 10 has open top 24, end seal 26, folded first side edge 28, folded second side edge 30, and bottom edge 32. End seal 26 is a heat seal of a first region of the inside of the film tubing (i.e., a first region of the inside surface of the film tubing) to a second region of the inside of the film tubing. End seal 26 is curved in order that a rounded meat product has a better fit with the interior volume within packaging article 10. Packaging article 10 also has skirt 34 between end seal 26 and bottom edge 32. Skirt 34 (also commonly referred to as a "header") has a pair of tear initiators 36, one through each lay-flat side of skirt 34. Skirt 34 also has a first pair of grip-assisters 38 on a first side of tear initiators 36 (one through each lay-flat side of skirt 34, with each tear initiator being a plurality of spaced apart cuts along a line), and a second pair of grip-assisters 40 (one through each lay-flat side of skirt 34) on a second side of tear initiators 36. Skirt 34 also has a supplemental heat seal 42 of a second region of the inside of the film tubing to itself. Skirt 34 also has a first pair of stabilizing slits 44 on a first side of tear initiators 36 (i.e., one stabilizing slit through each lay-flat side of skirt 34), a second pair of stabilizing slits 46 on a second side of tear initiators 36 (i.e., one stabilizing slit through each lay-flat side of skirt 34). Stabilizing slits 44 sand 46 serve to reduce stress on the tear initiators during film shrinkage, and to reduce the kind of shrinkage of skirt 34 that makes tear initiators 36 and grip-assisters 38 and 40 difficult to detect and use. While each of tear initiators 36, stabilizing slits 44, and stabilizing slits 46 can be a single continuous slit, preferably they are a series of perforations or a series of short slits, e.g., 3 short slits each about 8 mm long in a line, with the slits being separated by a distance of, for example, 4 millimeters. Grip-assisters 38 and 40 are formed by curved slits that terminate before the film portion (i.e., chad, illustrated, but unlabeled in FIG. 1) separated from the remainder of the film.

Optionally, at least a portion of skirt 34 is heatset, so that upon shrinking the film around the product, the shrinkage and curl of skirt 34 is reduced. Reducing the shrinkage of skirt 34 allows skirt 34, and the various features in skirt 34, such as the tear initiators and grip-assisters, to be readily apparent and easily accessible to the consumer.

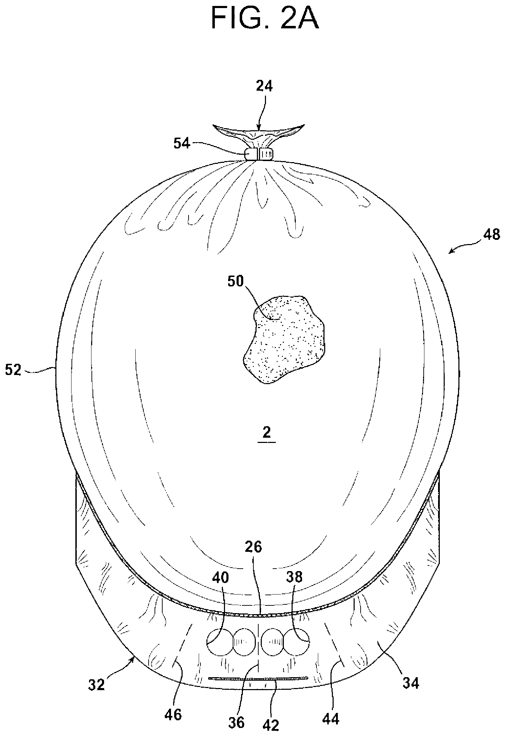

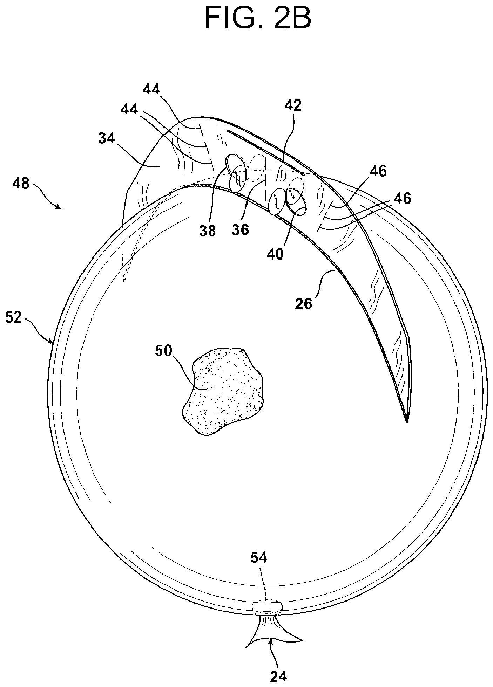

FIGs. 2A and 2B illustrate a perspective view of a preferred packaged product 48. Packaged product 48 has meat product 50 (see film cutaway exposing meat product 50) surrounded by packaging article 52. Meat product 50 comprised a water-added ham product. Packaging article 52 is shrunken tightly around meat product 50.

When meat product 50 was placed into the packaging article, the packaging article was as illustrated in FIG. 1, described above. Thereafter, the packaging article having meat product 50 therein was placed into a vacuum chamber and the atmosphere was evacuated from within the packaging article, and the packaging article was closed by a metal clip 54. Thereafter, packaged product 48 was placed into an oven and cooked at 54°C (130°F) for 1 hour, followed by continued cooking at 60°C (140°F) for 1 hour, followed continued cooking at 66°C (150°F) for one hour, followed by continued cooking at 71°C (160°F) until the internal temperature of meat product 50 reached a temperature of 68°C (155°F). During cooking, the heat-shrinkable film from which the packaging article was made shrunk tightly around meat product 50.

Packaging article 52 comprises heat seal 26 and header 34 outward of heat seal 26. Within header 34 are a pair of tear initiators 36 (one tear initiator in each lay-flat side of header 34) with first pair of grip-assisters 38 (one through each lay-flat side of header 34) on a first side of tear initiators 36, and a second pair of grip-assisters 40 (one through each lay-flat side of header 34) on a second side of tear initiators 36. Skirt 34 also has a supplemental (i.e., second) heat seal 42 of a third region of the inside of the film tubing to a fourth region of the inside of the film tubing. Skirt 34 also has a first pair of stabilization slits 44 on a first side of tear initiators 36 (i.e., one stabilization slit through each lay-flat side of skirt 34), and a second pair of stabilization slits 46 on a second side of tear initiators 36 (i.e., one slit line through each lay-flat side of skirt 34).

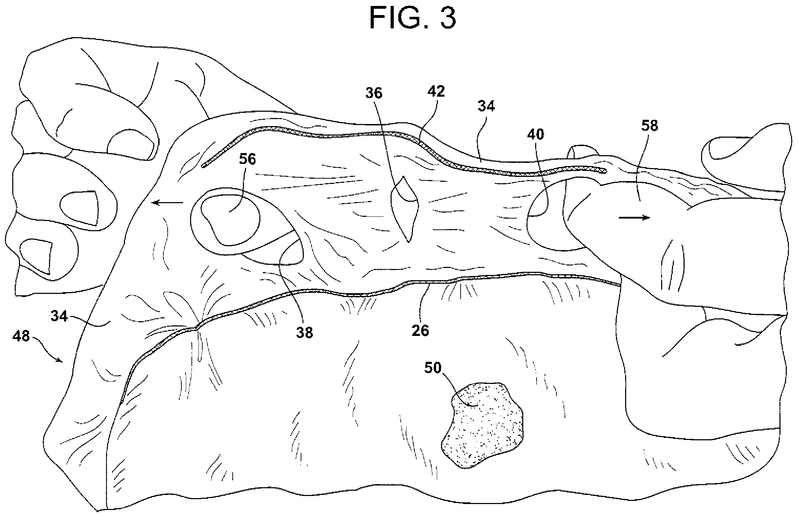

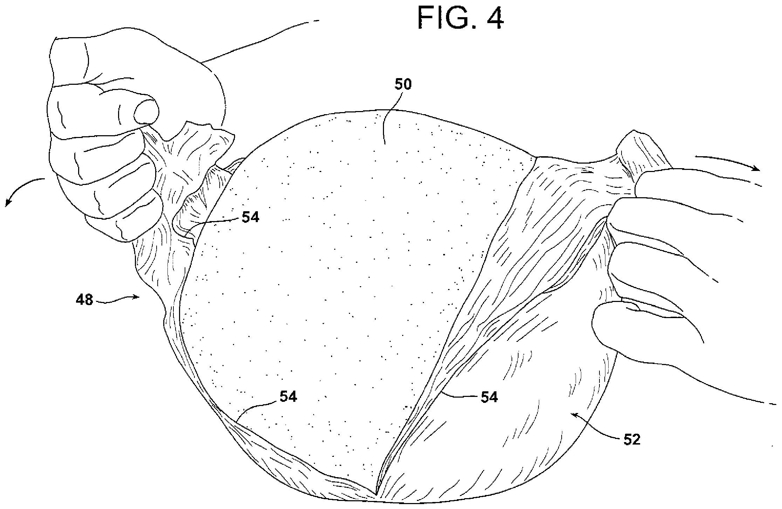

FIG. 3 is a perspective view of a portion of packaged product 48 of FIG. 2, with a thumb 56 of a consumer's right hand through first pair of grip-assisters 38 and a finger 58 of the consumer's left hand through second pair of grip-assisters 40. Thumb 56 and finger 58 are in position to pull first pair of grip-assisters 38 away from second pair of grip-assisters 40 away from one another, initially causing tear initiators 36 to spread open, with further pulling causing tears to initiate and propagate down each lay-flat side of packaging article 52, as illustrated in FIG. 4, described below.

FIG. 4 is a perspective view of packaged product 48 of FIG. 3 after packaging article 52 is torn open. As can be seen in FIG. 4, the pulling of grip-assister pair 38 away from grip-assister pair 40 resulted in the initiation and propagation of torn edges 54 from the pair of tear initiators. Two tears were made, i.e., one tear down each side of packaging article 52. The tear down the backside of packaged product 48 is not shown in FIG. 4. However, each tear is down the length of the shrunken packaging article 52, in the machine direction, i.e., in the direction in which the film is made, and each of the tears is relatively straight. As is apparent in FIG. 4, packaging article 52 tears cleanly in that the multilayer film does not delaminate during tearing even though the film adheres to the cooked meat product during cooking. Moreover, the film separates cleanly from meat product 50, without significant meat pull-off.

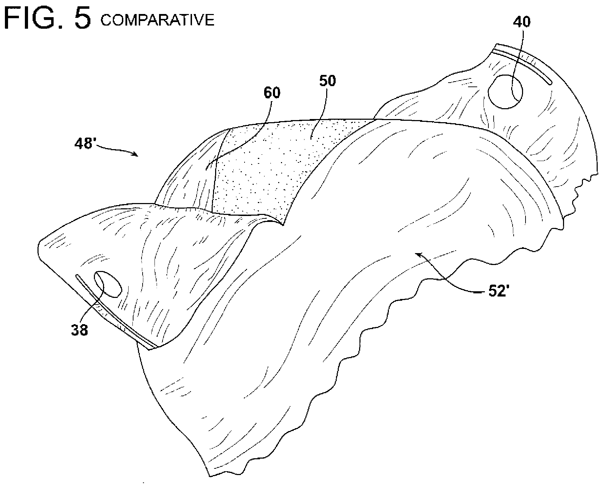

FIG. 5 is a perspective view of comparative packaged product 48' having features corresponding with the features of the packaging article 52 illustrated in FIGs. 1 through 4, described above. However, the multilayer film of comparative packaging article 52' differs from the multilayer film used to make packaging article 52, in that unlike the film used to make packaging article 52, the film used to make packaging article 52' does not have a layer comprising a tear-enhancing component such as an incompatible polymer blend and/or a particulate filler. As is apparent in FIG. 5, the pulling of grip-assister pair 38 away from grip-assister pair 40 results in the initiation and propagation of tearing, but as the film tears, the film exhibits an undesirable delamination as is apparent from delaminated film portion 60. Delamination can result in pieces of film remaining on the meat product after the package is opened and the meat product removed from the packaging article. Of course, that one or more pieces of delaminated film would remain on the meat product is undesirable.

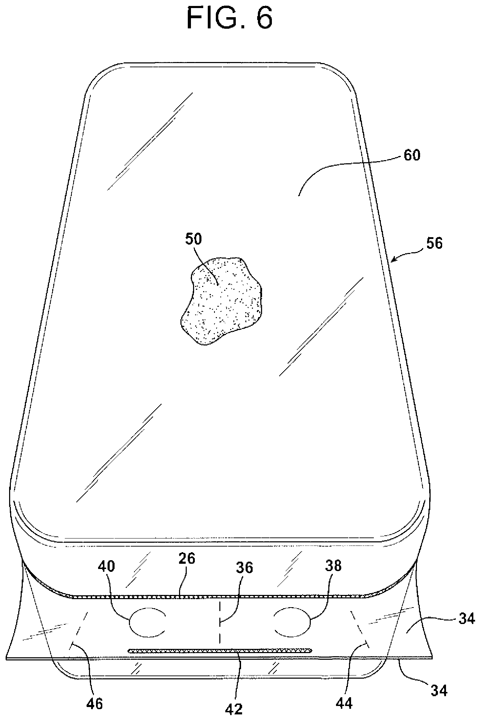

FIG. 6 illustrates a perspective view of alternative preferred molded packaged product 56. Packaged product 56 has meat product 50 surrounded by packaging article 60. Meat product 50 was a water-added ham product. Packaged product 56 was made by placing meat product 50 into the packaging article while the packaging article was as illustrated in FIG. 1, described above. The packaging article having meat product 50 therein was then placed into a mold (not shown) with force applied to conform packaging article 60 and meat product 50 into the shape of the mold cavity. Thereafter, the packaging article having meat product 50 therein was placed into a vacuum chamber and the atmosphere was evacuated from within the packaging article, and the packaging article was then closed by heat sealing across the open end thereof, resulting in packaging article 60. Excess film (not illustrated) outward of the seal was cut off and discarded. Packaging article 60 was then shrunk tightly around meat product 50 by passing the resulting packaged product 56 through a hot water bath at a temperature of about 68°C (155°F) in order to shrink the film around meat product 58. Thereafter, the packaged product was placed into an oven and cooked at 54°C (130°F) for 1 hour, followed by continued cooking at 60 (140°F) for 1 hour, followed continued cooking at 66°C (150°F) for one hour, followed by continued cooking at 71°C (160°F) until the internal temperature of the product achieved a temperature of 68°C (155°F). The result was packaged product 56 of FIG. 6. FIG. 6 illustrates header 34 with its pair of tear initiators 36 with first pair of grip-assisters 38 on a first side of tear initiators 36, and a second pair of grip-assisters 40 on a second side of tear initiators 36.

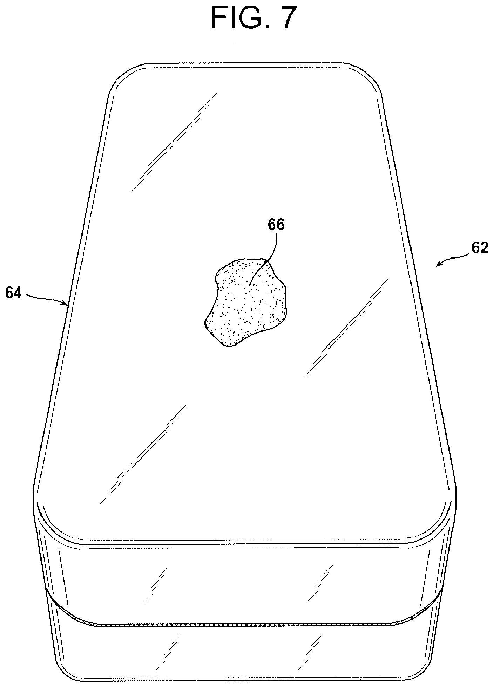

FIG. 7 illustrates a perspective view of a preferred alternative packaged product 62 which is similar to packaged product 56 of FIG. 6. As with packaged product 58 of FIG. 6, packaged product 62 is also molded to a desired shape. Packaged product 62 comprises packaging article 64 surrounding meat product 66. Meat product 66 is a water-added ham product. When meat product 66 is placed into packaging article 64, packaging article 64 is as illustrated in FIG. 1, except that the heat seal is about 0.5 inch from the bottom edge of the bag, and the packaging article has no tear initiators, grip-assisters, etc, in the skirt. Packaging article 64 having meat product 66 therein is placed into a mold with force applied to conform both packaging article 64 and meat product 66 into the shape of the mold cavity. Thereafter, packaging article 64 having meat product 66 therein is placed into a vacuum chamber and the atmosphere is evacuated from within packaging article 64, and packaging article 64 is closed by heat sealing across the open end thereof. After heat sealing packaging article 64 closed, the excess film outward of the seal is cut off and discarded.

Packaging article 64 is then shrunk tightly around meat product 66 by passing the resulting packaged product 62 through a hot water bath at a temperature of about 68°C (155°F) in order to shrink the film around meat product 66. Thereafter, the packaged product 62 is placed into an oven and cooked at 54°C (130°F) for 1 hour, followed by continued cooking at 60°C (140°F) for 1 hour, followed continued cooking at 66°C (150°F) for one hour, followed by continued cooking at 71°C (160°F) until the internal temperature of the product achieves an internal temperature of 68°C (155°F). The result is the packaged product 62 of FIG. 7. Packaged product 62 is designed to be opened by using a knife or scissors to make a slit through the skirt and the end seal followed by manually propagating tears from the slits down both sides of the package, down the full length of the package, so that meat product 66 can be removed from packaging article 64.

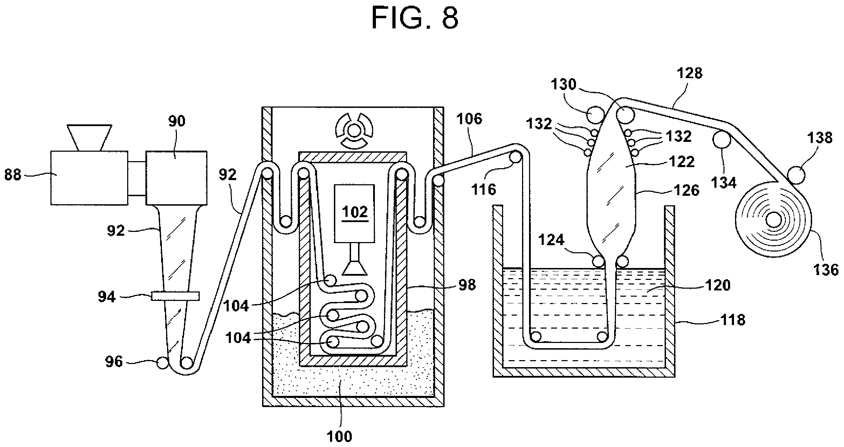

FIG. 8 is a schematic of a preferred process for making a heat-shrinkable film for use in making a preferred packaging article. In FIG. 8, solid polymer beads (not illustrated) are fed to a plurality of extruders (for simplicity, only extruder 88 is illustrated). Inside extruders 88, the polymer beads are forwarded, melted, and degassed, following which the resulting bubble-free melt is forwarded into die head 90, and extruded through an annular die, resulting in tubing tape 92 which is preferably from about 254 to 508 µm (10 to 20 mils) thick, and preferably has a lay-flat width of from about 5.08 to 25.4 cm (2 to 10 inches).

After cooling or quenching by water spray from cooling ring 94, tubing tape 92 is collapsed by pinch rolls 96, and is thereafter fed through irradiation vault 98 surrounded by shielding 100, where tubing 92 is irradiated with high energy electrons (i.e., ionizing radiation) from iron core transformer accelerator 102. Tubing 92 is guided through irradiation vault 98 on rolls 104. Preferably, tubing 92 is irradiated to a level of from about 40 to about 120 kGy, resulting in irradiated tubing 106, which is then passed over guide roll 116, after which irradiated tubing 106 is passed into and through hot water bath tank 118 containing hot water 120.

Irradiated tubing 106 is immersed in hot water 120 (preferably having a temperature of about 85°C (185°F) to about 99°C (210°F)) for a period of about 10 to about 100 seconds, i.e., for a time period long enough to bring the film up to the desired temperature for biaxial orientation. Thereafter, the resulting hot, irradiated tubing 122 is directed through nip rolls 124, and bubble 126 is blown, thereby transversely stretching hot, irradiated tubular tubing 122 so that a heat-shrinkable, oriented film tube 128 is formed.

Furthermore, while being blown, i.e., transversely stretched, nip rolls 130 have a surface speed higher than the surface speed of nip rolls 124, thereby resulting in longitudinal orientation. As a result of the transverse stretching and longitudinal drawing, oriented film tube 128 is produced, this blown tubing preferably having been both stretched at a ratio of from about 1:1.5 to about 1:6, and drawn at a ratio of from about 1:1.5 to about 1:6. More preferably, the stretching and drawing are each performed at a ratio of from about 1:2 to about 1:4. The result is a biaxial orientation of from about 1:2.25 to about 1:36, more preferably, from about 1:4 to about 1:16. While bubble 126 is maintained between pinch rolls 124 and 130, oriented film tube 128 is collapsed by rollers 132, and thereafter conveyed through pinch rolls 130 and across guide roll 134, and then rolled onto wind-up roll 136. Idler roll 138 assures a good wind-up. This process can be carried out continuously in a single operation, or intermittently, e.g., as a two-stage process, in which the extruded, irradiated tape is wound up after irradiation, and, after a period of storage, unwound and subjected to heating and orienting in order to arrive at oriented film tubing 128.

In an embodiment, skirt 408 further comprises at least one grip-assister for assisting grip of the multilayer film during manual tearing, as disclosed in Pub. No. US 2009/0116768 A1.

The invention is illustrated by the following example, which is provided for the purpose of representation, and is not to be construed as limiting the scope of the invention. Unless stated otherwise, all percentages, parts, etc. are by weight.

### Example 1

A heat-shrinkable multilayer film for use in making a preferred packaging article according to the present invention was produced by the process illustrated in FIG. 8, described above. The composition of this film, referred to herein as Film No. 1, is provided in Table 1, below. The first layer was an outer film layer that served as the inside layer and seal layer of an end-seal bag made from the film. The second layer was a tie layer between the first layer and the third layer. The third layer was a layer that, together with the seventh layer (described below), comprised an incompatible polymer blend in order to provide the film with a linear tear property in the machine direction after shrinking. The fourth layer was a tie layer. The fifth layer was an oxygen (i.e., O₂) barrier layer, i.e., the layer that controlled the transmission rate of atmospheric oxygen through the film. The sixth layer was a tie layer. The eighth layer was a layer that, together with the third layer, comprised an incompatible polymer blend in order to provide the film with a linear tear property in the machine direction after shrinking. The seventh layer was an outer layer of the film that served as an outside, abuse-resistant layer of the packaging article.

**TABLE 1**

| Film No. 1 (working example) | | |
|---|---|---|
| Layer Number (Layer Function) | Layer Chemical Identity | Layer Thickness (µm (mils)) |
| First (inside & seal) | blend of 50 wt % polyamide 6/12 and 50 wt % polyamide 12 | 7.11 (0.28) |
| Second (tie) | 80% Plexar^{®} PX3227 blend of maleic anhydride modified polyethylene and linear low density polyethylene 20% Exact^{®} 4053 ethylene/butane copolymer | 7.11 (0.28) |
| Third | 70% Exceed^{®} 1012CJ ethylene/hexene copolymer | 12.70 |
| (incompatible polymer blend) | 30% Escorene^{®} LD 713.934053 ethylene/vinyl acetate copolymer | (0.50) |
| Fourth (tie) | 100% Plexar^{®} PX3227 blend of maleic anhydride modified polyethylene and linear low density polyethylene | 3.56 (0.14) |
| Fifth (barrier) | 100% Eval^{®} E 105A ethylene vinyl alcohol copolymer | 4.06 (0.16) |
| Sixth (tie) | 100% Plexar^{®} PX3227 blend of maleic anhydride modified polyethylene and linear low density polyethylene | 3.56 (0.14) |
| Eighth (incompatible polymer blend) | 70% Exceed^{®} 1012CJ ethylene/hexene copolymer 30% Escorene^{®} LD 713.934053 ethylene/vinyl acetate copolymer | 16.26 (0.64) |
| Seventh (outside) | 80% A-3018 ethylene/vinyl acetate copolymer 20% Marlex^{®} 9006 ethylene/hexene copolymer | 5.08 (0.20) |

The various resins identified in Table 1, above, have the properties provided immediately below, and were obtained from the sources provided below. The comparative films set forth in Tables 2 and 3, below, also contained many of these same resins.

Plexar^{®} PX3227 was blend of maleic anhydride-modified polyethylene and linear low density polyethylene and had a density of 0.913 g/ cm³, a melt index of 1.7 dg/min, a melting point of 124°C, and was obtained from Nippon Goshei.

Exact^{®} 4053 was a single site catalyzed ethylene/butene copolymer having a density of 0.888 g/cm³, a melt index of 2.2 dg/min, and was obtained from Exxon Mobil.

Exceed^{®} 1012CJ was a single site catalyzed ethylene/hexene copolymer and had a density of 0.912 g/cm³, a melt index of 1.0 dg/min, and was obtained from Exxon Mobil.

Escorene^{®} LD713.93 was an ethylene/vinyl acetate copolymer having a vinyl acetate content of 14.4 wt %, a density of 0.933 g/cm³, a melt index of 3.5 dg/min, and was obtained from Exxon Mobil.

Eval^{®} E 105A was an ethylene/vinyl alcohol copolymer having a density of 1.14 g/ cm³, a melt index of 5.5 dg/min, contained at least 44 mol % ethylene, and was obtained from Evalca/Kuraray.

A-3018 was an ethylene/vinyl acetate copolymer containing 6.5 wt. % vinyl acetate had a density of 0.929 g/cm³, a melt index of 0.55 dg/min, and was obtained from Westlake Chemicals.

Marlex^{®} 9006 was an ethylene/hexene copolymer having a density of 0.953 g/ cm³, a melt index of 6.6 dg/min, and was obtained from Chevron Phillips Chemical.

Film No. 1 was fully coextruded as a seamless tubing using the process illustrated in FIG. 8, described above. The seamless tubing was converted into end-seal bags in accordance with FIG. 1, described above. A water-added ham product was packaged in the bags, under vacuum, with the open end of the bag having been heat sealed closed or closed with a metal clip after the atmosphere was evacuated from the bag.

Thereafter, packaged product 48 was placed into an oven and cooked at 54°C (130°F) for 1 hour, followed by continued cooking at 60°C (140°F) for 1 hour, followed continued cooking at 66°C (150°F) for one hour, followed by continued cooking at 71°C (160°F) until the internal temperature of the product achieved a temperature of 68°C (155°F). During cooking, the heat-shrinkable film from which the packaging article was made shrunk tightly around meat product 50. After cooking was complete, the packaged products were allowed to cool to room temperature and then the packaged products were placed in a refrigerator and brought to a temperature of 1°C (34°F). When the package was opened, the packaging article tore cleanly down its length in the machine direction, without film delamination, allowing the cooked meat product to be removed from the package.

The machine direction tearing after shrinking without film delamination was achieved with Film No. 1 for both (i) packages with headers and tear initiators as illustrated in FIGs. 1-4 and 6, as well as for (ii) packages made without headers, i.e., as illustrated in FIG. 7. The opening of packages as illustrated in FIG. 7 was performed using a knife, scissors, or other sharp implement. Once the cut was made in the machine direction, a tear was manually propagated down the length of the packaging article, without film delamination, allowing the cooked meat product be removed from the package. In Film No. 1, the bond strength of the second layer to the first layer was not measured but was believed to be 80.7 g/cm (205 grams per inch) because the composition and thickness of the first and second layers is the same as the first and second layers of Example 2, below, which was analyzed and determined to be 80.7 g/cm (205 grams per inch).

### Example 2 (Comparative)

The film of Example 2, i.e., Film No. 2, is a comparative film that had been used for some time for cook-in packaging. Film No. 2 was a six-layer heat-shrinkable film that was fully coextruded as a seamless tubing, i.e., made by the same process used for the making of Film No. 1. The seamless tubing was converted into end-seal bags. Various meat products were packaged in the bags, under vacuum, with the open end of the bag having been heat sealed closed, or closed with a metal clip, after the atmosphere was evacuated from the bag. The bag was then shrunk around the meat product by passing the packaged product through a hot water bath having an internal temperature of 68°C (155°F).

**Table 2**

| Film No. 2 (Comparative) | | |
|---|---|---|
| Layer Number (Layer Function) | Layer Chemical Identity | Layer Thickness (µm (mils)) |
| First (inside) | blend of 50 wt % polyamide 6/12 and 50 wt % polyamide 12 | 7.11 (0.28) |
| Second (tie) | 80% Plexar^{®} PX3227 blend of maleic anhydride modified polyethylene and linear low density polyethylene 20% Exact^{®} 4053 ethylene/butane copolymer | 7.11 (0.28) |
| Third (tie) | 100% Plexar^{®} PX3227 blend of maleic anhydride modified polyethylene and linear low density polyethylene | 3.56 (0.14) |
| Fourth (barrier) | 100% Eval^{®} E 105A ethylene vinyl alcohol copolymer | 4.06 (0.16) |
| Fifth (tie) | 100% Plexar^{®} PX3227 blend of maleic anhydride modified polyethylene and linear low density polyethylene | 4.06 (0.16) |
| Sixth (outside) | 80% A-3018 ethylene vinyl acetate copolymer 20% T60-500-119 high density polyethylene | 33.53 (1.32) |

Resins in Table 2 that are present in Table 1 are as identified in the paragraphs below Table 1, above.

T60-500-119 was a high density polyethylene having a density of 0.961 g/ cm³ and a melt index of 6.2 dg/min, and was obtained from Ineos.

A comparison of the film layers of Film No. 2 (i.e., the film of Example 2) with the film layers of the Film No. 1 (i.e., the film of Example 1, above) reveals that the first, second, third, fourth, fifth, and sixth layers of Film No. 2 substantially correspond, in both polymeric composition and layer thickness, with the first, second, fourth, fifth, sixth, and seventh layers, respectively, of Film No. 1. That is, six of the eight layers of Film No. 1 correspond with the six layers of Film No. 2. The difference between Film No. 1 and Film No. 2 was the presence third and eighth layers of Film No. 1 that are not present in Film No. 2. However, the sixth layer (i.e., outside layer) of Film No. 2 was approximately as thick (i.e., 33.53 µm (1.32 mils)) as the combined thickness of the third, seventh, and eighth layers of Film No. 1 (i.e., 12.7 + 5.08 + 16.26 = 34.04 µm (0.50 + 0.20 + 0.64 = 1.34 mils)), ensuring that the overall film thickness and film strength was not a factor affecting the difference in tearing or delamination resistance. The slight difference in the composition of the outside layers of Film No. 1 vs Film No. 2 is believed to have no bearing on the difference in the delamination results between Film No. 1 and Film No. 2

As described above, the opening of a cooked meat product package made from Film No. 1 occurred without film delamination. However, Film No. 2 delaminated upon the tearing open of the package. Analysis revealed that the delamination of Film No. 2 occurred between the first layer and the second layer. During the manual tearing of shrunken Film No. 2 in the opening of the package, considerably more force was required to propagate the tears down each side of the package. The higher force to propagate the tear is believed to exacerbate the film delamination problem.

In stark contrast to the opening of the package made from Film No. 1, the peeling of Film No. 2 from the cooked meat product resulted in a large area of delamination beginning as the material was peeled past the point of the initial tear initiator. Microscopic analysis of layer failure showed that the delamination occurred between the first and second layers of Film No. 2. It is believed that the considerably lower force required to propagate the manual tearing of Film No. 1, vs. Film No. 2, is a significant factor in allowing a package made from Film No. 1 to be opened without delamination. In Film No. 2, the bond strength of the third layer to the first layer was measured and determined to be 80.7 g/cm (205 grams per inch).

In addition, it has been discovered that Film No. 1 has increased endurance of the seal to cook temperatures in the 93°C to 99°C (200°F to 210°F) range, relative to Film No. 2. More particularly, when packaged products were cooked for 6 hours at 99°C (210°F), packaging articles made from Film No. 1 exhibited 100% survival without delamination, whereas only 71.9% of the packaging articles made from Film No. 2 survived cooking without delamination. Moreover, when packaged products were cooked for 12 hours at 99°C (210°F), packaging articles made from Film No. 1 exhibited 100% survival without delamination, whereas only 53.1% of the packaging articles made from Film No. 2 survived cooking without delamination. When packaged products were cooked for 12 hours at 93°C (200°F), packaging articles made from Film No. 1 exhibited 100% survival cooking without delamination, whereas only 94% of the packaging articles made from Film No. 2 survived cooking without delamination.

### Example 3 (Working)

A heat-shrinkable multilayer film for use in making a packaging article according to the present invention was produced in a manner as illustrated in FIG. 2, described above. The composition of this film, referred to herein as Film No. 3, is provided in Table 3, below. The first layer was an outer film layer that served as the inside layer and seal layer of an end-seal bag made from the film. The second layer was a tie layer between the first layer and the third layer. The third layer was a layer that comprised an incompatible polymer blend in order to provide the film with a linear tear property in the machine direction after shrinking. The fourth layer was an outer layer that served as the outside layer of the bag.

**TABLE 3**

| Film No. 3 (working) | | |
|---|---|---|
| Layer Number (Layer Function) | Layer Chemical Identity | Layer Thickness (µm (mils)) |
| First (inside & seal) | blend of 50 wt % polyamide 6/12 and 50 wt % polyamide 12 | 7.11 (0.28) |
| Second (tie) | 100% Plexar^{®} PX3227 blend of maleic anhydride modified polyethylene and linear low density polyethylene | 3.81 (0.15) |
| Third (incompatible polymer blend layer) | 70% Exceed^{®} 1012CJ ethylene/hexene copolymer 28% Escorene^{®} LD 713.934053 ethylene/vinyl acetate copolymer 2% blue color concentrate in ethylene/methyl acrylate copolymer | 37.09 (1.46) |
| Fourth (outside) | 80% PE1651 ethylene vinyl acetate copolymer 20% T60-500-119 | 12.95 (0.51) |

Resins in Table 3 that are present in Table 1 or Table 2 are as identified in the paragraphs below Tables 1 and 2, above.

Blue Color Concentrate in ethylene/methacrylate copolymer had a density of 0.951 g/cm³, and was obtained from Colortech.

PE1651 ethylene vinyl acetate copolymer had a vinyl acetate content of 6.5% a density of 0.928 g/cm³, a melt index of 0.5 dg/min, and was obtained from Flint Hills Resources, LP.

Film No. 3 was fully coextruded as a seamless tubing using the process illustrated in FIG. 8, described above. The seamless tubing was converted into end-seal bags and used to package a water-added ham product that was then cooked, as described above for Film No. 1, with the film shrinking tightly around the produce. After cooling and refrigeration, the package was opened and tore down it length in the machine direction, without film delamination, allowing the cooked meat product to be removed from the package.

### Examples 4 through 40 (all are comparative examples)

Initial attempts to solve the delamination-during-tearing problem began with a six layer film very similar to Film No. 2 as a starting point. Experiments were run by modifying the polymeric composition of the second film layer, i.e., a tie layer directly adhering to the seal layer, in an effort to locate a stronger bonding tie layer that would not delaminate from the seal layer. Unless otherwise indicated in the Comments in Table 5, the composition and thickness of the first, third, fourth, fifth, and sixth layers of Films 4-42 is set forth in Table 4, below.

**TABLE 4**

| Composition and Thickness of Layers 1, 3, 4, 5, 6 of Film Nos. 4 through 40 | | |
|---|---|---|
| Layer Number (Layer Function) | Layer Chemical Identity | Layer Thickness (µm (mils)) |
| First (inside & seal) | blend of 50 wt % polyamide 6/12 and 50 wt % polyamide 12 | 7.11 (0.28) |
| Second (tie) | See Table 5 | 7.11 (0.28) |
| Third (tie) | 100% Plexar^{®} PX3227 blend of maleic anhydride modified polyethylene and linear low density polyethylene | 3.56 (0.14) |
| Fourth (barrier) | 100% Eval^{®} E 105A ethylene vinyl alcohol copolymer | 4.06 (0.16) |
| Fifth (tie) | 100% Plexar^{®} PX3227 blend of maleic anhydride modified polyethylene and linear low density polyethylene | 4.06 (0.16) |
| Sixth (outside) | 80% A-3018 ethylene/vinyl acetate copolymer 20% Marlex^{®} 9006 ethylene/hexene copolymer | 33.53 (1.32) |

Table 5, below, provides the polymeric composition of the second layer for each of Film Nos. 4-40. In each of Film Nos. 4-40, the second layer had a thickness of 7.11 µm (0.28 mil). Delamination, where noted, occurred between the first and second layers.

**Table 5**

| Composition of Second Layer for Film Nos. 4-40 | | | |
|---|---|---|---|
| Film No. | Composition of Second Layer (=First Tie Layer) | Bond Strength Layer 1 to Layer 2 (g/cm (g/inch)) | Comment |
| 4 | Bynel^{®} 41E687 | 54.7 (139) | Untested: assumed would delaminate; bond strength ≤ 80.7 g/cm (205 g/in) |
| 5 | Bynel^{®} 41E850 | 61.8 (157) | Untested: assumed would delaminate; bond strength ≤ 80.7 g/cm (205 g/in) |
| 6 | Bynel^{®} CXA 21E787 | 76.8 (195) | Untested: assumed would delaminate; bond strength ≤ 80.7 g/cm (205 g/in) |
| 7 | Plexar^{®} PX 3080 | 0.00 (0.00) | Untested: assumed would delaminate; bond strength ≤ 80.7 g/cm (205 g/in) |
| 8 | EVAL^{®} E 105A | 85.8 (218) | Delaminated |
| 9 | 80% Infuse^{®} D9107.10 20% Bynel^{®} CXA 41E710 | 179.5 (456) | Delaminated |
| 10 | Admer^{®} 2118A | 14.2 (36) | Untested: assumed delamination; bond strength ≤ 80.7 g/cm (205 g/in) |
| 11 | Arkema^{®} 18300 | 80.3 (204) | Untested: assumed delamination; bond strength ≤ 80.7 g/cm (205 g/in) |
| 12 | 80% Arkema^{®} 18300 20% Exact^{®} 4011 | 30.3 (77) | Untested: assumed delamination; bond strength ≤ 80.7 g/cm (205 g/in) |
| 13 | 80% Infuse^{®} D9100.05 20% Bynel^{®} CXA 41E710 | 68.5 (174) | Untested: assumed delamination; bond strength ≤ 80.7 g/cm (205 g/in) |
| 14 | Bynel^{®} CXA 41E710 | 52.0 (132) | Delaminated |
| 15 | 80% Plexar^{®} PX 3080 20% Exact^{®} 4011 | 26.0 (66) | Untested: assumed delamination; bond strength ≤ 80.7 g/cm (205 g/in) |
| 16 | 80% Plexar^{®} PX3227 20% Exact^{®} 4053 | 62.2 (158) | Untested: assumed delamination; bond strength ≤ 80.7 g/cm (205 g/in) |
| 17 | 90% Infuse^{®} D9107.10 10% Bynel^{®} CXA 41E710 | 45.3 (115) | Untested: assumed delamination; bond strength ≤ 80.7 g/cm (205 g/in) |
| 18 | 75% Infuse^{®} D9107.10 25% Bynel^{®} CXA 41E710 | 74.0 (188) | Untested: assumed delamination; bond strength ≤ 80.7 g/cm (205 g/in) |
| 19 | 90% Bynel^{®} CXA 21E787 10% Infuse^{®} D9107.10 | 13.0 (330) | Delaminated |
| 20 | 90% Affinity^{®} EG8100G 10% Bynel^{®} CXA 41E710 | 98.0 (249) | Delaminated |
| 21 | 90% Infuse^{®} D9100.05 10% Bynel^{®} CXA 41E710 | 60.6 (154) | Untested: assumed delamination; bond strength ≤ 80.7 g/cm (205 g/in) |
| 22 | 85% Infuse^{®} D9100.05 15% Bynel^{®} CXA 41E710 | 32.7 (83) | Untested: assumed delamination; bond strength ≤ 80.7 g/cm (205 g/in) |
| Film No. | Composition of Second Layer (=First Tie Layer) | Bond Strength Layer 1 to Layer 2 (g/cm (g/inch)) | Comment |
| 23 | 100% Eval^{®} E 105A ethylene vinyl alcohol copolymer | 94.9 (241) | Delaminated |
| 24 | 20% Fusabond^{®} A ME-556D 80% Exact^{®} 4053 | 38.1 (96.8) | Untested: assumed delamination; bond strength ≤ 205 g/in |
| 25 | Admer^{®} 2118A | 67.3 (171) | Untested: assumed delamination; bond strength ≤ 80.7 g/cm (205 g/in) |
| 26 | 80% Admer^{®} 2118A 20% Infuse^{®} D9107.10 | 40.6 (103) | Untested: assumed delamination; bond strength ≤ 80.7 g/cm (205 g/in) |
| 27 | 80% Admer^{®} 2118A 20% Exact^{®} 4053 | 60.2 (153) | Untested: assumed delamination; bond strength ≤ 80.7 g/cm (205 g/in) |
| 28 | 80% Amplify^{®} TY 1052 H 20% Exact^{®} 4053 | 35.2 (89.4) | Untested: assumed delamination; bond strength ≤ 80.7 g/cm (205 g/in) |
| 29 | 80% Fusabond^{®} A ME-556D 20% Infuse^{®} D9107.10 | 83.1 (211) | Untested: assumed delamination; bond strength just above 80.7 g/cm (205 g/in) |
| 30 | 80% Fusabond^{®} A ME-556D 20% Exact^{®} 4053 | 74.4 (189) | Untested: assumed delamination; bond strength ≤ 80.7 g/cm (205 g/in) |
| 31 | 90% Bynel^{®} CXA 21E787 10% Infuse^{®} D9107.10 | 142.1 (361) | Delaminated |
| 32 | 80% Bynel^{®} CXA 21E787 20% Exact^{®} 4053 | 150.0 (381) | Delaminated |
| 33 | ADMER^{®} 2676A (PX099) | 64.4 (163.5) | Delaminated |
| 34 | Admer^{®} 2675A | 33.6 (85.4) | Delaminated |
| 35 | Bynel^{®} CXA 21E787 | 266.9 (678) | Delaminated |
| 36 | 95% Bynel^{®} CXA 21E787 5% Topas^{®} 9903D-10 | 228.7 (581) | Delaminated |
| 37 | 95% Bynel^{®} 3861 5% Topas^{®} 9903D-10 | 200.0 (508) | no delamination occurred while being stripped |
| 38 | Surlyn^{®} 1857 | 74.0 (188) | Delaminated |
| 39 | 80% Topas^{®} 9903D-10 20% Amplify^{®} TY 1052 H | 3.3 (8.4) | Delaminated |
| 40 | 80% Infuse^{®} D9107.10 20% Bynel^{®} CXA 41E710 | 179.5 (456) | Delaminated |

Bynel^{®} 41E687 was a maleic anhydride modified linear low density polyethylene having a density of 0.910 g/ cm³ and a melt index of 1.7 dg/min, and was obtained from DuPont.

Bynel^{®} 41E850 was a blend of a maleic anhydride modified polyethylene and linear low density polyethylene, and had a density of 0.900 g/ cm³ and a melt index of 1.0 dg/min, and was obtained from DuPont.

Bynel^{®} CXA 21E787 was a maleic anhydride modified ethylene methacrylic acid copolymer having a density of 0.93 g/ cm³ and a melt index of 1.6 dg/min, and was obtained from DuPont.

Plexar^{®} PX 3080 was a maleic anhydride modified linear low density polyethylene having a density of 0.91 g/ cm³ and a melt index of 1.8 dg/min, and was obtained from LyondellBasell Industries.

Infuse^{®} D9107.10 was a polyethylene having a density of 0.866 g/ cm³ and a melt index of 1.0 dg/min, and was obtained from Dow.

Bynel^{®} CXA 41E710 was a maleic anhydride modified linear low density polyethylene having a density of 0.91 g/ cm³ and a melt index of 2.7 dg/min, and was obtained from DuPont.

Admer^{®} 2118A was a maleic anhydride modified linear low density polyethylene having a density of 0.91g/ cm³ and a melt index of 1.8 dg/min, and was obtained from Mitsui.

Exact^{®} 4011 was a single site catalyzed ethylene/butene copolymer having a density of 0.888 g/ cm³ and a melt index of 2.2 dg/min, and was obtained from ExxonMobil.

Arkema^{®} 18300 was a linear low density polyethylene having a density of 0.91 g/ cm³ and a melt index of 1.8 dg/min, and was obtained from Arkema.

Infuse^{®} D9100.05 was a very low density polyethylene having a density of o.877 g/ cm³ and a melt index of 1.0 dg/min, and was obtained from Dow.

Affinity^{®} EG8100G was a single site catalyzed substantially linear ethylene/butene copolymer having limited long chain branching, having a density of 0.870 g/ cm³ and a melt index of 1.0 dg/min, and was obtained from Dow.

Fusabond^{®} A ME-556 D was a coextrusion adhesive resin having a density of 0.93 g/ cm³ and a melt index of 1.8 dg/min, and was obtained from DuPont.

Amplify^{®} TY 1052 H was a maleic anhydride modified linear low density polyethylene having a density of 0.875 g/ cm³ and a melt index of 1.25 dg/min, and was obtained from Dow.

Admer^{®} 2676A was a maleic anhydride modified linear low density polyethylene having a density of 0.92 g/ cm³ and a melt index of 4.4 dg/min, and was obtained from Mitsui.

Topas^{®} 9903D-10 was an ethylene/norbornene copolymer having a density of 0.974 g/ cm³ and a melt index of 1.0 dg/min, and was obtained from Topas Advanced Polymers, Inc.

Bynel^{®} 3861 was a maleic anhydride modified ethylene/vinyl acetate copolymer having a density of 0.980 g/ cm³ and a melt index of 2.0 dg/min, and was obtained from DuPont.

Surlyn^{®} 1857 was a zinc neutralized ethylene/methyl acrylate copolymer having a density of 0.94 g/ cm³ and a melt index of 4.0 dg/min, and was obtained from DuPont.

Resins in Table 5 that are not identified immediately above are identified following Table 1 or Table 2, above.

The results in Table 5 show that a wide variety of tie layer compositions which bonded to the polyamide blend seal layer failed to solve the delamination problem at the interface between the polyamide blend seal layer and adjacent tie layer. Even when the bond strength between the layers was as high as 86.6 to 266.9 g/cm (220 to 678 grams per inch), delamination persisted in the absence of a layer containing an incompatible polymer blend. More particularly, Comparative examples 8, 9, 19, 20, 23, 31, 32, 35, 36, and 40 each exhibited a bond strength of greater than 80.7 g/cm (205 gm/inch), but none of these films included a layer containing an incompatible polymer blend, and all of these films delaminated upon testing.

However, working examples 1 and 3, and comparative example 37 demonstrate that the incompatible polymer blend solves the delamination problem when tearing the packaging article open after the meat product is cooked and the film is shrunk around the meat product and adhering to the meat product. The bond strengths for these working examples were 80.7 g/cm (205 grams per inch) (Examples 1 and 3) and 200 g/cm (508 grams per inch) (Example 37). However, the results in Table 5 support the conclusion that it was the presence of the layer comprising the incompatible polymer blend, rather than the bond strength, that prevented the delamination from occurring upon tearing the bags open after the cooking of the meat product.

In comparative examples 4-7, 10-13, 15-18, 21-22, and 24-30, the bond strength was less than 80.7 g/cm (205 grams per inch), i.e., lower than the bond strength of comparative example 2. As a result, these samples were not tested for delamination, as it was assumed that these samples would delaminate because (i) none of these films included a layer containing an incompatible polymer blend, and (ii) the bond strength between the seal layer and the adjacent tie layer was lower than the bond strength of the Comparative Example 2, which delaminated. Examples 14, 33, 34, 38, and 39 exhibited a bond strength of less than 80.7 g/cm (205 grams per inch) and were tested and did delaminate, supporting the assumption that comparative examples 4-7, 10-13, 15-18, 21-22, and 24-30, if tested, would also have delaminated.

## Claims

1. A cook-in packaged product (48, 56, 62) comprising an easy-open packaging article (10, 52, 60, 64) including a multilayer film (22, 128) surrounding and adhering to a cooked meat product (50, 58, 66), with the packaging article (10, 52, 60, 64) having a heat seal (26) of the inside surface of the film (22, 128) to itself, the multilayer film (22, 128) comprising:
(A) a first layer that is an inside seal layer comprising a thermoplastic polymer comprising at least one member selected from the group consisting of (i) ionomer resin that bonds to ethylene homopolymer with a bond strength of less than 14.2 grams per cm (36 grams per inch), (ii) polyamide, and (iii) polyester;
(B) a second layer that bonds to the first layer with a bond strength of at least 14.2 grams per cm (36 grams per inch), wherein the second layer is a tie layer;
(C) a third layer, with the second layer being between the first layer and the third layer, that comprises a tear-enhancing component comprising an incompatible polymer blend, wherein:
the incompatible polymer blend comprises at least one member selected from the group consisting of:
(i) a blend of from 90 to 30 weight percent ethylene homopolymer and/or ethylene/alpha-olefin copolymer with from 10 to 70 weight percent ethylene/unsaturated ester copolymer having an unsaturated ester content of at least 10 weight percent;
(ii) a blend of ionomer resin with ethylene/unsaturated ester copolymer, and/or polybutylene, and/or propylene homopolymer and/or propylene copolymer;
(iii) a blend of homogeneous ethylene/alpha-olefin copolymer with recycled polymer blend comprising ethylene homopolymer, propylene homopolymer, ethylene copolymer, propylene copolymer, polyamide, ethylene/vinyl alcohol copolymer, ionomer resin, anhydride-modified ethylene/alpha-olefin copolymer, and/or antiblock;
(iv) a blend of from 10 to 75 weight percent ethylene/unsaturated ester copolymer with from 90 to 15 weight percent polypropylene and/or propylene/ethylene copolymer, and/or polybutylene, and/or modified ethylene/alpha-olefin copolymer, and/or styrene homopolymer, and/or styrene/butadiene copolymer;
(v) a blend of ethylene/norbornene copolymer with ethylene/unsaturated ester copolymer and/or polypropylene and/or polybutylene;
(vi) a blend of from 90 to 15 weight percent ethylene/alpha-olefin copolymer with from 10 to 75 weight percent polypropylene and/or polybutylene and/or ethylene/norbornene;
(vii) a blend of from 90 to 25 weight percent homogeneous propylene homopolymer and/or homogeneous propylene copolymer with from 10 to 75 weight percent homogeneous ethylene/alpha-olefin copolymer and/or ethylene/unsaturated ester copolymer;
(viii) a blend of propylene homopolymer and/or propylene/ethylene copolymer and/or polybutylene with ethylene/methyl acrylate copolymer and/or ethylene/acrylic acid copolymer and/or ethylene/butyl acrylate copolymer;
(ix) a blend of polyamide with polystyrene and/or ethylene/alpha-olefin copolymer and/or ethylene/vinyl acetate copolymer and/or styrene/butadiene copolymer; and
(x) a blend of polyamide 6 and polyamide 6I6T; and
the incompatible polymer blend is present in at least one layer of the multilayer film, and the incompatible polymer blend makes up at least 20 weight percent of the film, based on total film weight.

2. The cook-in packaged product (48, 56, 62) according to Claim 1, wherein the second layer bonds to the first layer at a bond strength of 14.2 to 54.3 grams per cm (36 to 138 grams per inch).

3. The cook-in packaged product (48, 56, 62) according to Claim 1, wherein the second layer bonds to the first layer at a bond strength of at least 54.7 grams per cm (139 grams per inch).

4. The cook-in packaged product (48, 56, 62) according to Claim 1, wherein the film is heat-shrinkable and the second layer bonds to the first layer at a bond strength of from 54.7 to 267.7 grams per cm (139 to 680 grams per inch).

5. The cook-in packaged product (48, 56, 62) according to Claim 4, wherein the second layer is a first tie layer and the multilayer film (22, 128) further comprises fourth layer that is a second tie layer and a fifth layer that is an O₂-barrier layer, with the fifth layer comprising at least one member selected from the group consisting of saponified ethylene/vinyl acetate copolymer, polyvinylidene chloride, polyamide 6I/6T, polyamide MXD6,polyester, and polyacrylonitrile, and the fourth layer is between the third layer and the fifth layer.

6. The cook-in packaged product (48, 56, 62) according to Claim 5, wherein the multilayer film (22, 128) further comprises a sixth layer that is a third tie layer and a seventh layer that is an outside layer of the packaging article (10, 52, 60, 64), with the sixth layer being between the fifth layer and a seventh layer, and the seventh layer comprising at least one member selected from the group consisting of olefin homopolymer, olefin copolymer, polyamide, polyester, and polyurethane.

7. The cook-in packaged product (48, 56, 62) according to Claim 6, wherein the multilayer film (22, 128) further comprises an eighth layer that also comprises the incompatible polymer blend, with the eighth layer being between the seventh layer and the sixth layer, the eighth layer comprising at least one member selected from the group consisting of:
(i) a blend of from 90 to 30 weight percent ethylene homopolymer and/or ethylene/alpha-olefin copolymer with from 10 to 70 weight percent ethylene/unsaturated ester copolymer having an unsaturated ester content of at least 10 weight percent;
(ii) a blend of ionomer resin with ethylene/unsaturated ester copolymer, and/or polybutylene, and/or propylene homopolymer and/or propylene copolymer;
(iii) a blend of homogeneous ethylene/alpha-olefin copolymer with recycled polymer blend comprising ethylene homopolymer, propylene homopolymer, ethylene copolymer, propylene copolymer, polyamide, ethylene/vinyl alcohol copolymer, ionomer resin, anhydride-modified ethylene/alpha-olefin copolymer, and/or antiblock;
(iv) a blend of from 10 to 75 weight percent ethylene/unsaturated ester copolymer with from 90 to 15 weight percent polypropylene and/or propylene/ethylene copolymer, and/or polybutylene, and/or modified ethylene/alpha-olefin copolymer, and/or styrene homopolymer, and/or styrene/butadiene copolymer;
(v) a blend of ethylene/norbornene copolymer with ethylene/unsaturated ester copolymer and/or polypropylene and/or polybutylene;
(vi) a blend of from 90 to 15 weight percent ethylene/alpha-olefin copolymer with from 10 to 75 weight percent polypropylene and/or polybutylene and/or ethylene/norbornene;
(vii) a blend of from 90 to 25 weight percent homogeneous propylene homopolymer and/or homogeneous propylene copolymer with from 10 to 75 weight percent homogeneous ethylene/alpha-olefin copolymer and/or ethylene/unsaturated ester copolymer;
(viii) a blend of propylene homopolymer and/or propylene/ethylene copolymer and/or polybutylene with ethylene/methyl acrylate copolymer and/or ethylene/acrylic acid copolymer and/or ethylene/butyl acrylate copolymer;
(ix) a blend of polyamide with polystyrene and/or ethylene/alpha-olefin copolymer and/or ethylene/vinyl acetate copolymer and/or styrene/butadiene copolymer; and
(x) a blend of polyamide 6 and polyamide 6I6T.

8. The cook-in packaged product (48, 56, 62) according to Claim 7, wherein the packaging article (10, 52, 60, 64) further comprises a skirt (34) extending outward from the first heat seal, the skirt (34) having a tear initiator (36) therein, and the skirt has a first lay-flat side and a second lay-flat side, and the tear initiator (36) comprises a first tear initiator (36) through the first lay-flat side and a second tear initiator (36) through the second lay-flat side, with the first and second tear initiators (36) being coincident with one another, and the skirt (34) further comprises (A) a first grip-assister (38) comprising a first passageway through the first lay-flat side of the skirt (34) and a first passageway through a second lay-flat side of the skirt (34), with the first passageways being coincident with one another, and a second grip-assister (40) comprising a second passageway through the first lay-flat side of the skirt (34) and a second passageway through the second lay-flat side of the skirt (34), with the second passageways being coincident with one another, with the tear initiators (36) being between the first and second grip-assisters (38, 40), and the heat seal (26) is a first heat seal and the first lay-flat side of the skirt (34) is heat sealed to itself at a second heat seal (42), and the incompatible polymer blend is present in the film (22, 128) in an amount of from 40 to 60 weight percent, based on total film weight.

9. The cook-in packaged product (48, 56, 62) according to Claim 1, wherein the packaging article (10, 52, 60, 64) comprises a seamless tubing and the heat seal (26) is a first heat seal on a first end of the packaging article (10, 52, 60, 64), with the packaging article (10, 52, 60, 64) further comprising a closure on a second end of the packaging article (10, 52, 60, 64), the closure comprising a member selected from the group consisting of a heat seal and a clip (54).

10. The cook-in packaged product (48, 56, 62) according to Claim 1, wherein the packaging article (10, 52, 60, 64) further comprises a skirt (34) extending outward from the first heat seal (26), the skirt having a tear initiator (36) therein.

11. The cook-in packaged product (48, 56, 62) according to Claim 10, wherein the skirt (34) has a first lay-flat side and a second lay-flat side, and the tear initiator (36) comprises a first tear initiator (36) through the first lay-flat side and a second tear initiator (36) through the second lay-flat side, with the first and second tear initiators (36) being coincident with one another, and the skirt (34) further comprises (A) a first grip-assister (38) comprising a first passageway through the first lay-flat side of the skirt (34) and a first passageway through a second lay-flat side of the skirt (34), with the first passageways being coincident with one another, and (B) a second grip-assister (40) comprising a second passageway through the first lay-flat side of the skirt (34) and a second passageway through the second lay-flat side of the skirt (34), with the second passageways being coincident with one another, with the tear initiators (36) being between the first and second grip-assisters (38, 40).

12. The cook-in packaged product (48, 56, 62) according to Claim 11, wherein the heat seal (26) is a first heat seal and the first lay-flat side of the skirt (34) is heat sealed to itself at a second heat seal (42) which is outward of the first heat seal (26).

13. The cook-in packaged product (48, 56, 62) according to Claim 11, wherein the skirt (34) further comprises a first stabilizing slit (44) on a first side of the tear initiators (36) and a second stabilizing slit (46) on a second side of the tear initiators (36), the first stabilizing slit (44) comprising a first slit (44) through the first lay-flat side of the skirt (34) and a first slit (44) through the second lay-flat side of the skirt (34), the first slits (44) being coincident with one another, and the second stabilizing slit (46) comprising a second slit (46) through the first lay-flat side of the skirt (34) and a second slit (46) through the second lay-flat side of the skirt (34), the second slits (46) being coincident with one another, with the tear initiator (36) and the first and second grip-assisters (38, 40) all being between the first stabilizing slit (44) and the second stabilizing slit (46).

14. The cook-in packaged product (48, 56, 62) according to Claim 1, wherein the incompatible polymer blend is present in the film (22, 128) in an amount of from 30 to 70 weight percent, preferably from 40 to 60 weight percent, based on total film weight.

## Patentansprüche

1. Kochfähig verpacktes Produkt (48, 56, 62), das einen leicht zu öffnenden Verpackungsartikel (10, 52, 60, 64) mit einer Mehrschichtfolie (22, 128) umfasst, die ein gegartes Fleischprodukt (50, 58, 66) umgibt und an diesem haftet, wobei der Verpackungsartikel (10, 52, 60,64) eine Heißsiegelung (26) der inneren Oberfläche der Folie (22, 128) an sich selbst aufweist, wobei die Mehrschichtfolie (22, 128)
a) eine erste Schicht, die eine innere Siegelschicht ist, die ein thermoplastisches Polymer umfasst, das mindestens ein Mitglied aus der Gruppe bestehend aus (i) Ionomerharz, das an Ethylenhomopolymer mit einer Bindungsfestigkeit von weniger als 14,2 g/cm (36 g/Zoll) bindet, (ii) Polyamid und (iii) Polyester umfasst;
b) eine zweite Schicht, die an die erste Schicht mit einer Bindungsfestigkeit von mindestens 14,2 g/cm (36 g/Zoll) bindet, wobei die zweite Schicht eine Verbindungsschicht ist;
c) eine dritte Schicht, wobei die zweite Schicht zwischen der ersten und der dritten Schicht angeordnet ist, welche eine reißerhöhende Komponente umfasst, die ein inkompatibles Polymergemisch umfasst,
wobei das inkompatible Polymergemisch mindestens ein Mitglied aus der Gruppe bestehend aus
(i) einem Gemisch aus 90 bis 30 Gew.-% Ethylenhomopolymer und/oder Ethylen/Alpha-Olefin-Copolymer mit 10 bis 70 Gew.-% Ethylen/ungesättigtem Ester-Copolymer, das einen Gehalt an ungesättigtem Ester von mindestens 10 Gew.-% aufweist,
(ii) einem Gemisch aus Ionomerharz mit Ethylen/ungesättigtem Ester-Copolymer und/oder Polybutylen und/oder Propylenhomopolymer und/oder Propylen-Copolymer,
(iii) einem Gemisch aus homogenem Ethylen/Alpha-Olefin-Copolymer mit rückgewonnenem Polymergemisch, das Ethylenhomopolymer, Proylenhomopolymer, EthylenCopolymer, Propylen-Copolymer, Polyamid, Ethylen/Vinylalkohol-Copolymer, Ionomerharz, anhydrid-modifiziertes Ethylen/Alpha-Olefin-Copolymer und/oder Antihaftmittel enthält,
(iv) einem Gemisch aus 10 bis 75 Gew.-% Ethylen/ungesättigtem Ester-Copolymer mit 90 bis 15 Gew.-% Polypropylen und/oder Propylen/EthylenCopolymer und/oder Polybutylen und/oder modifiziertem Ethylen/Alpha-Olefin-Copolymer, und/oder Styrol-Homopolymer und/oder Styrol/Butadien-Copolymer,
(v) einem Gemisch aus Ethylen/Norbornen-Copolymer mit Ethylen/ungesättigtem Ester-Copolymer und/oder Polypropylen und/oder Polybutylen,
(vi) einem Gemisch aus 90 bis 15 Gew.-% Ethylen/Alpha-Olefin-Copolymer mit 10 bis 75 Gew.-% Polypropylen und/oder Polybutylen und/oder Ethylen/Norbornen,
(vii) einem Gemisch aus 90 bis 25 Gew.-% homogenem Propylen-Homopolymer und/oder homogenem Propylen-Copolymer mit 10 bis 75 Gew.-% homogenem Ethylen/Alpha-Olefin-Copolymer und/oder Ethylen/ungesättigtem Ester-Copolymer,
(viii) einem Gemisch aus Propylen-Homopolymer und/oder Propylen/Ethylen-Copolymer und/oder Polybutylen mit Etylen/Methylacrylat-Copolymer und/oder Ethylen/Acrylsäure-Copolymer und/oder Ethylen-Butylacrylat-Copolymer,
(ix) einem Gemisch aus Polyamid mit Polystyrol und/oder Ethylen/Vinylacetat-Copolymer und/oder Styrol/Butadien-Copolymer und
(x) einem Gemisch aus Polyamid 6 und Polyamid 6I6T umfasst, wobei das inkompatible Polymergemisch in mindestens einer Schicht der Mehrschichtfolie vorhanden ist und das inkompatible Polymergemisch mindestens 20 Gew.-% der Folie, bezogen auf das Gesamtgewicht der Folie, ausmacht.

2. Kochfähig verpacktes Produkt (48, 56, 62) gemäß Anspruch 1, wobei die zweite Schicht an die erste Schicht mit einer Bindungsfestigkeit von 14,2 bis 54,3 g/cm (36 bis 138 g/Zoll) gebunden ist.

3. Kochfähig verpacktes Produkt (48, 56, 62) gemäß Anspruch 1, wobei die zweite Schicht an die erste Schicht mit einer Bindungsfestigkeit von mindesten 54,7 g/cm (138 g/Zoll) gebunden ist.

4. Kochfähig verpacktes Produkt (48, 56, 62) gemäß Anspruch 1, wobei die Folie wärmeschrumpfbar ist und die zweite Schicht mit einer Bindungsfestigkeit von 54,7 bis 267,7 g/cm (139 bis 680 g/Zoll) an die erste Schicht gebunden ist.

5. Kochfähig verpacktes Produkt (48, 56, 62) gemäß Anspruch 4, wobei die zweite Schicht eine erste Verbindungsschicht ist und die Mehrschichtfolie (22, 128) ferner eine vierte Schicht, die eine zweite Verbindungsschicht ist, und eine fünfte Schicht umfasst, die eine O₂-Barriereschicht ist, wobei die fünfte Schicht mindestens Mitglied aus der Gruppe bestehend aus verseiftem Ethylen/Vinylacetat-Copolymer, Polyvinylidenchlorid, Polyamid 6I/6T, Polyamid MXD6, Polyester und Polyacrylnitril umfasst und die vierte Schicht zwischen der dritten und der fünften Schicht angeordnet ist.

6. Kochfähig verpacktes Produkt (48, 56, 62) gemäß Anspruch 5, wobei die Mehrschichtfolie (22, 128) ferner eine sechste Schicht, die eine dritte Verbindungsschicht ist, und eine siebte Schicht umfasst, die eine Außenschicht des Verpackungsartikels (10, 52, 60) ist, wobei die sechste Schicht zwischen der fünften und siebten Schicht angeordnet ist und die siebte Schicht mindestens ein Mitglied aus der Gruppe bestehend aus Olefin-Homopolymer, Olefin-Copolymer, Polyamid, Polyester und Polyurethan umfasst.

7. Kochfähig verpacktes Produkt (48, 56, 62) gemäß Anspruch 6, wobei die Mehrschichtfolie (22, 128) ferner eine achte Schicht umfasst, die ebenfalls das inkompatible Polymergemisch umfasst, wobei die achte Schicht zwischen der siebten und der sechsten Schicht angeordnet ist und mindestens einen Bestandteil aus der Gruppe bestehend aus
(i) einem Gemisch aus 90 bis 30 Gew.-% Ethylenhomopolymer und/oder Ethylen/Alpha-Olefin-Copolymer mit 10 bis 70 Gew.-% Ethylen/ungesättigtem Ester-Copolymer, das einen Gehalt an ungesättigtem Ester von mindestens 10 Gew.-% aufweist,
(ii) einem Gemisch aus Ionomerharz mit Ethylen/ungesättigtem Ester-Copolymer und/oder Polybutylen und/oder Propylenhomopolymer und/oder Propylen-Copolymer,
(iii) einem Gemisch aus homogenem Ethylen/Alpha-Olefin-Copolymer mit rückgewonnenem Polymergemisch, das Ethylenhomopolymer, Proylenhomopolymer, EthylenCopolymer, Propylen-Copolymer, Polyamid, Ethylen/Vinylalkohol-Copolymer, Ionomerharz, anhydrid-modifiziertes Ethylen/Alpha-Olefin-Copolymer und/oder Antihaftmittel enthält,
(iv) einem Gemisch aus 10 bis 75 Gew.-% Ethylen/ungesättigtem Ester-Copolymer mit 90 bis 15 Gew.-% Polypropylen und/oder Propylen/EthylenCopolymer und/oder Polybutylen und/oder modifiziertem Ethylen/Alpha-Olefin-Copolymer, und/oder Styrol-Homopolymer und/oder Styrol/Butadien-Copolymer,
(v) einem Gemisch aus Ethylen/Norbornen-Copolymer mit Ethylen/ungesättigtem Ester-Copolymer und/oder Polypropylen und/oder Polybutylen,
(vi) einem Gemisch aus 90 bis 15 Gew.-% Ethylen/Alpha-Olefin-Copolymer mit 10 bis 75 Gew.-% Polypropylen und/oder Polybutylen und/oder Ethylen/Norbornen,
(vii) einem Gemisch aus 90 bis 25 Gew.-% homogenem Propylen-Homopolymer und/oder homogenem Propylen-Copolymer mit 10 bis 75 Gew.-% homogenem Ethylen/Alpha-Olefin-Copolymer und/oder Ethylen/ungesättigtem Ester-Copolymer,
(viii) einem Gemisch aus Propylen-Homopolymer und/oder Propylen/Ethylen-Copolymer und/oder Polybutylen mit Etylen/Methylacrylat-Copolymer und/oder Ethylen/Acrylsäure-Copolymer und/oder Ethylen-Butylacrylat-Copolymer,
(ix) einem Gemisch aus Polyamid mit Polystyrol und/oder Ethylen/Vinylacetat-Copolymer und/oder Styrol/Butadien-Copolymer und
(x) einem Gemisch aus Polyamid 6 und Polyamid 6I6T umfasst.

8. Kochfähig verpacktes Produkt (48, 56, 62) gemäß Anspruch 7, wobei der Verpackungsartikel (10, 52, 60, 64) ferner einen Randbereich (34) aufweist, die sich von der ersten Heißsiegelung nach außen erstreckt, wobei der Randbereich (34) einen Aufreißinitiator (36) enthält und der Randbereich eine erste flachgelegte Seite und eine zweite flachgelegte Seite aufweist und der Aufreißinitiator (36) einen ersten Aufreißinitiator durch die erste flachgelegte Seite und einen zweiten Aufreißinitiator (36) durch die zweite flachgelegte Seite aufweist, wobei der erste und der zweite Aufreißinitiator (36) miteinander übereinstimmen und der Randbereich (34) ferner (A) einen ersten Griffassistenten (38), der einen ersten Durchgang durch die erste flachgelegte Seite des Randbereichs (34) und einen ersten Durchgang durch eine zweite flachgelegte Seite des Randbereichs (34) aufweist, wobei die ersten Durchgänge miteinander übereinstimmen, und einen zweiten Griffassistenten (40) umfasst, der einen zweiten Durchgang durch die erste flachgelegte Seite des Randbereichs (34) sowie einen zweiten Durchgang durch die zweite flachgelegte Seite des Randbereichs (34) aufweist, wobei die zweiten Durchgänge miteinander übereinstimmen und die Aufreißinitiatoren (36) sich zwischen dem ersten und dem zweiten Griffassistenten (38, 40) befinden und die Heißsiegelung (26) eine erste Heißsiegelung ist, wobei die erste flachgelegte Seite des Randbereichs (34) an einer zweiten Heißsiegelung (42) mit sich selbst heißversiegelt ist, und das inkompatible Polymergemisch in der Folie (22, 128) in einer Menge von 40 bis 60 Gew.-%, bezogen auf das Gesamtgewicht der Folie, vorhanden ist.

9. Kochfähig verpacktes Produkt (48, 56, 62) gemäß Anspruch 1, wobei der Verpackungsartikel (10, 52, 60, 64) einen nahtlosen Schlauch umfasst und die Heißsiegelung sich an einem ersten Ende des Verpackungsartikels (10, 52, 60, 64) befindet, wobei der Verpackungsartikel (10, 52, 60, 64) ferner einen Verschluss an einem zweiten Ende des Verpackungsartikels (10, 52, 60, 64) aufweist, wobei der Verschluss einen Bestandteil aus der Gruppe bestehend aus einer Heißsiegelung und einem Clip (54) umfasst.

10. Kochfähig verpacktes Produkt (48, 56, 62) gemäß Anspruch 1, wobei der Verpackungsartikel (10, 52, 60, 64) ferner einen Randbereich (34) aufweist, die sich von der ersten Heißsiegelung (26) nach außen erstreckt, wobei der Randbereich einen Aufreißinitiator (36) umfasst.

11. Kochfähig verpacktes Produkt (48, 56, 62) gemäß Anspruch 10, wobei Randbereich (34) eine erste flachgelegte Seite und eine zweite flachgelegte Seite aufweist, und der Aufreißinitiator (36) einen ersten Aufreißinitiator (36) durch die erste flachgelegte Seite und einen zweiten Aufreißinitiator (36) durch die zweite flachgelegte Seite umfasst, wobei der erste und zweite Aufreißinitiator (36) miteinander übereinstimmen, und der Randbereich (34) ferner (A) einen ersten Griffassistenten (38), der einen ersten Durchgang durch die erste flachgelegte Seite des Randbereichs (34) und einen ersten Durchgang durch die zweite flachgelegte Seite des Randbereichs (34) aufweist, wobei die ersten Durchgänge miteinander übereinstimmen, und (B) einen zweiten Griffassistenten (40) umfasst, der einen zweiten Durchgang durch die erste flachgelegte Seite des Randbereichs (34) und einen zweiten Durchgang durch die zweite flachgelegte Seite des Randbereichs (34) umfasst, wobei die zweiten Durchgänge miteinander übereinstimmen, wobei sich die Aufreißinitiatoren (36) zwischen den ersten und zweiten Griffassistenten (38, 40) befinden.

12. Kochfähig verpacktes Produkt (48, 56, 62) gemäß Anspruch 11, wobei die Heißsiegelung (26) eine erste Heißsiegelung ist und die erste flachgelegte Seite des Randbereichs (34) mit sich selbst an einer zweiten Heißsiegelung (42), welche außerhalb der ersten Heißsiegelung (26) angeordnet ist, heißversiegelt ist.

13. Kochfähig verpacktes Produkt (48, 56, 62) gemäß Anspruch 11, wobei der Randbereich (34) ferner einen ersten Stabilisierungsschlitz (44) auf einer ersten Seite der Aufreißinitiatoren (36) und einen zweiten Stabilisierungsschlitz (46) auf einer zweiten Seite der Aufreißinitiatoren (36) umfasst, wobei der erste Stabilisierungsschlitz (44) einen ersten Schlitz (44) durch die erste flachgelegte Seite des Randbereichs (34) und einen ersten Schlitz durch die zweite flachgelegte Seite des Randbereichs (34) aufweist und die ersten Schlitze (44) miteinander übereinstimmen, und der zweite Stabilisierungsschlitz einen zweiten Schlitz durch die erste flachgelegte Seite des Randbereichs (34) und einen zweiten Schlitz durch die zweite flachgelegte Seite des Randbereichs (34) umfasst, wobei die zweiten Schlitze miteinander übereinstimmen, wobei sich der Aufreißinitiator (36) und der erste und zweite Griffassistent (38, 40) sämtlich zwischen dem ersten und dem zweiten Stabilisierungsschlitz (44, 46) befinden.

14. Kochfähig verpacktes Produkt (48, 56, 62) gemäß Anspruch 1, wobei das inkompatible Polymergemisch in der Folie (22, 128) in einer Menge von 30 bis 75 Gew.-%, vorzugsweise in einer Menge von 40 bis 60 Gew.-%, bezogen auf das Gesamtgewicht der Folie, vorhanden ist.

## Revendications

1. Produit emballé à cuisson dans l'emballage (48, 56, 62) comprenant un article d'emballage (10, 52, 60, 64) à ouverture facile incluant un film (22, 128) multicouche entourant et adhérant à un produit de viande cuit (50, 58, 66), avec l'article d'emballage (10, 52, 60, 64) présentant un thermoscellage (26) de la surface intérieure du film (22, 128) à lui-même, le film (22, 128) multicouche comprenant :
(A) une première couche qui est une couche d'étanchéité intérieure comprenant un polymère thermoplastique comprenant au moins un élément sélectionné dans le groupe consistant en (i) une résine ionomère qui est liée à un homopolymère d'éthylène avec une force de liaison de moins de 14,2 grammes par cm (36 grammes par pouce), (ii) du polyamide, et (iii) du polyester ;
(B) une deuxième couche qui est liée à la première couche avec une force de liaison d'au moins 14,2 grammes par cm (36 grammes par pouce), dans lequel la deuxième couche est une couche de liaison ;
(C) une troisième couche, avec la deuxième couche entre la première couche et la troisième couche, qui comprend un composant améliorant la déchirure comprenant un mélange de polymères incompatibles, dans lequel :
le mélange de polymères incompatibles comprend au moins un élément sélectionné dans le groupe consistant en :
(i) un mélange de 90 à 30 pour cent en poids d'homopolymère d'éthylène et/ou de copolymère d'éthylène/alpha-oléfine avec de 10 à 70 pour cent en poids de copolymère d'éthylène/ester insaturé présentant une teneur en ester insaturé d'au moins 10 pour cent en poids ;
(ii) un mélange de résine ionomère avec un copolymère d'éthylène/ester insaturé, et/ou du polybutylène, et/ou un homopolymère de propylène et/ou un copolymère de propylène ;
(iii) un mélange de copolymère d'éthylène/alpha-oléfine homogène avec un mélange de polymères recyclés comprenant un homopolymère d'éthylène, un homopolymère de propylène, un copolymère d'éthylène, un copolymère de propylène, du polyamide, un copolymère d'éthylène/alcool vinylique, une résine ionomère, un copolymère d'éthylène/alpha-oléfine modifié par un anhydride, et/ou un anti-adhérent ;
(iv) un mélange de 10 à 75 pour cent en poids de copolymère d'éthylène/ester insaturé avec de 90 à 15 pour cent en poids de polypropylène et/ou de copolymère de propylène/éthylène, et/ou de polybutylène, et/ou de copolymère d'éthylène/alpha-oléfine modifié, et/ou d'homopolymère de styrène, et/ou de copolymère de styrène/butadiène ;
(v) un mélange de copolymère d'éthylène/norbornène avec un copolymère d'éthylène/ester insaturé et/ou du polypropylène et/ou du polybutylène ;
(vi) un mélange de 90 à 15 pour cent en poids de copolymère d'éthylène/alpha-oléfine avec de 10 à 75 pour cent en poids de polypropylène et/ou de polybutylène et/ou d'éthylène/norbornène ;
(vii) un mélange de 90 à 25 pour cent en poids d'homopolymère de propylène homogène et/ou de copolymère de propylène homogène avec de 10 à 75 pour cent en poids de copolymère d'éthylène/alpha-oléfine homogène et/ou de copolymère d'éthylène/ester insaturé ;
(viii) un mélange d'homopolymère de propylène et/ou de copolymère de propylène/éthylène et/ou de polybutylène avec un copolymère d'éthylène/acrylate de méthyle et/ou un copolymère d'éthylène/acide acrylique et/ou un copolymère d'éthylène/acrylate de butyle ;
(ix) un mélange de polyamide avec du polystyrène et/ou un copolymère d'éthylène/alpha-oléfine et/ou un copolymère d'éthylène/acétate de vinyle et/ou un copolymère de styrène/butadiène ; et
(x) un mélange de polyamide 6 et de polyamide 6I6T ; et
le mélange de polymères incompatibles est présent dans au moins une couche du film multicouche, et le mélange de polymères incompatibles constitue au moins 20 pour cent en poids du film, sur la base du poids total du film.

2. Produit emballé à cuisson dans l'emballage (48, 56, 62) selon la revendication 1, dans lequel la deuxième couche est liée à la première couche avec une force de liaison de 14,2 à 54,3 grammes par cm (36 à 138 grammes par pouce).

3. Produit emballé à cuisson dans l'emballage (48, 56, 62) selon la revendication 1, dans lequel la deuxième couche est liée à la première couche avec une force de liaison d'au moins 54,7 grammes par cm (139 grammes par pouce).

4. Produit emballé à cuisson dans l'emballage (48, 56, 62) selon la revendication 1, dans lequel le film est thermorétractable et la deuxième couche est liée à la première couche avec une force de liaison de 54,7 à 267,7 grammes par cm (139 à 680 grammes par pouce).

5. Produit emballé à cuisson dans l'emballage (48, 56, 62) selon la revendication 4, dans lequel la deuxième couche est une première couche de liaison et le film (22, 128) multicouche comprend en outre une quatrième couche qui est une deuxième couche de liaison et une cinquième couche qui est une couche barrière à l'O₂, avec la cinquième couche comprenant au moins un élément sélectionné dans le groupe consistant en un copolymère d'éthylène/acétate de vinyle saponifié, du polychlorure de vinylidène, du polyamide 6I/6T, du polyamide MXD6, du polyester, et du polyacrylonitrile, et la quatrième couche est entre la troisième couche et la cinquième couche.

6. Produit emballé à cuisson dans l'emballage (48, 56, 62) selon la revendication 5, dans lequel le film (22, 128) multicouche comprend en outre une sixième couche qui est une troisième couche de liaison et une septième couche qui est une couche extérieure de l'article d'emballage (10, 52, 60, 64), avec la sixième couche entre la cinquième couche et une septième couche, et la septième couche comprenant au moins un élément sélectionné dans le groupe consistant en un homopolymère d'oléfine, un copolymère d'oléfine, du polyamide, du polyester, et du polyuréthanne.

7. Produit emballé à cuisson dans l'emballage (48, 56, 62) selon la revendication 6, dans lequel le film (22, 128) multicouche comprend en outre une huitième couche qui comprend également le mélange de polymères incompatibles, avec la huitième couche entre la septième couche et la sixième couche, la huitième couche comprenant au moins un élément sélectionné dans le groupe consistant en :
(i) un mélange de 90 à 30 pour cent en poids d'homopolymère d'éthylène et/ou de copolymère d'éthylène/alpha-oléfine avec de 10 à 70 pour cent en poids de copolymère d'éthylène/ester insaturé présentant une teneur en ester insaturé d'au moins 10 pour cent en poids ;
(ii) un mélange de résine ionomère avec un copolymère d'éthylène/ester insaturé, et/ou du polybutylène, et/ou un homopolymère de propylène et/ou un copolymère de propylène ;
(iii) un mélange de copolymère d'éthylène/alpha-oléfine homogène avec un mélange de polymères recyclés comprenant un homopolymère d'éthylène, un homopolymère de propylène, un copolymère d'éthylène, un copolymère de propylène, du polyamide, un copolymère d'éthylène/alcool vinylique, une résine ionomère, un copolymère d'éthylène/alpha-oléfine modifié par un anhydride, et/ou un anti-adhérent ;
(iv) un mélange de 10 à 75 pour cent en poids de copolymère d'éthylène/ester insaturé avec de 90 à 15 pour cent en poids de polypropylène et/ou de copolymère de propylène/éthylène, et/ou de polybutylène, et/ou de copolymère d'éthylène/alpha-oléfine modifié, et/ou d'homopolymère de styrène, et/ou de copolymère de styrène/butadiène ;
(v) un mélange de copolymère d'éthylène/norbornène avec un copolymère d'éthylène/ester insaturé et/ou du polypropylène et/ou du polybutylène ;
(vi) un mélange de 90 à 15 pour cent en poids de copolymère d'éthylène/alpha-oléfine avec de 10 à 75 pour cent en poids de polypropylène et/ou de polybutylène et/ou d'éthylène/norbornène ;
(vii) un mélange de 90 à 25 pour cent en poids d'homopolymère de propylène homogène et/ou de copolymère de propylène homogène avec de 10 à 75 pour cent en poids de copolymère d'éthylène/alpha-oléfine homogène et/ou de copolymère d'éthylène/ester insaturé ;
(viii) un mélange d'homopolymère de propylène et/ou de copolymère de propylène/éthylène et/ou de polybutylène avec un copolymère d'éthylène/acrylate de méthyle et/ou un copolymère d'éthylène/acide acrylique et/ou un copolymère d'éthylène/acrylate de butyle ;
(ix) un mélange de polyamide avec du polystyrène et/ou un copolymère d'éthylène/alpha-oléfine et/ou un copolymère d'éthylène/acétate de vinyle et/ou un copolymère de styrène/butadiène ; et
(x) un mélange de polyamide 6 et de polyamide 6I6T.

8. Produit emballé à cuisson dans l'emballage (48, 56, 62) selon la revendication 7, dans lequel l'article d'emballage (10, 52, 60, 64) comprend en outre une jupe (34) s'étendant vers l'extérieur à partir du premier thermoscellage, la jupe (34) présentant un initiateur de déchirure (36) dans celle-ci, et la jupe présente un premier côté aplati et un second côté aplati, et l'initiateur de déchirure (36) comprend un premier initiateur de déchirure (36) à travers le premier côté aplati et un second initiateur de déchirure (36) à travers le second côté aplati, avec les premier et second initiateurs de déchirure (36) coïncidant l'un avec l'autre, et la jupe (34) comprend en outre (A) une première aide à la préhension (38) comprenant un premier passage à travers le premier côté aplati de la jupe (34) et un premier passage à travers un second côté aplati de la jupe (34), avec les premiers passages coïncidant l'un avec l'autre, et une seconde aide à la préhension (40) comprenant un second passage à travers le premier côté aplati de la jupe (34) et un second passage à travers le second côté aplati de la jupe (34), avec les seconds passages coïncidant l'un avec l'autre, avec les initiateurs de déchirure (36) entre les première et seconde aides à la préhension (38, 40), et le thermoscellage (26) est un premier thermoscellage et le premier côté aplati de la jupe (34) est thermoscellé à lui-même au niveau d'un second thermoscellage (42), et le mélange de polymères incompatibles est présent dans le film (22, 128) en une quantité de 40 à 60 pour cent en poids, sur la base du poids total du film.

9. Produit emballé à cuisson dans l'emballage (48, 56, 62) selon la revendication 1, dans lequel l'article d'emballage (10, 52, 60, 64) comprend un tube sans joint et le thermoscellage (26) est un premier thermoscellage sur une première extrémité de l'article d'emballage (10, 52, 60, 64), avec l'article d'emballage (10, 52, 60, 64) comprenant en outre une fermeture sur une seconde extrémité de l'article d'emballage (10, 52, 60, 64), la fermeture comprenant un élément sélectionné dans le groupe consistant en un thermoscellage et une attache (54).

10. Produit emballé à cuisson dans l'emballage (48, 56, 62) selon la revendication 1, dans lequel l'article d'emballage (10, 52, 60, 64) comprend en outre une jupe (34) s'étendant vers l'extérieur à partir du premier thermoscellage (26), la jupe présentant un initiateur de déchirure (36) dans celle-ci.

11. Produit emballé à cuisson dans l'emballage (48, 56, 62) selon la revendication 10, dans lequel la jupe (34) présente un premier côté aplati et un second côté aplati, et l'initiateur de déchirure (36) comprend un premier initiateur de déchirure (36) à travers le premier côté aplati et un second initiateur de déchirure (36) à travers le second côté aplati, avec les premier et second initiateurs de déchirure (36) coïncidant l'un avec l'autre, et la jupe (34) comprend en outre (A) une première aide à la préhension (38) comprenant un premier passage à travers le premier côté aplati de la jupe (34) et un premier passage à travers un second côté aplati de la jupe (34), avec les premiers passages coïncidant l'un avec l'autre, et (B) une seconde aide à la préhension (40) comprenant un second passage à travers le premier côté aplati de la jupe (34) et un second passage à travers le second côté aplati de la jupe (34), avec les seconds passages coïncidant l'un avec l'autre, avec les initiateurs de déchirure (36) entre les première et seconde aides à la préhension (38, 40).

12. Produit emballé à cuisson dans l'emballage (48, 56, 62) selon la revendication 11, dans lequel le thermoscellage (26) est un premier thermoscellage et le premier côté aplati de la jupe (34) est thermoscellé à lui-même au niveau d'un second thermoscellage (42) qui est vers l'extérieur du premier thermoscellage (26).

13. Produit emballé à cuisson dans l'emballage (48, 56, 62) selon la revendication 11, dans lequel la jupe (34) comprend en outre une première fente (44) de stabilisation sur un premier côté des initiateurs de déchirure (36) et une seconde fente (46) de stabilisation sur un second côté des initiateurs de déchirure (36), la première fente (44) de stabilisation comprenant une première fente (44) à travers le premier côté aplati de la jupe (34) et une première fente (44) à travers le second côté aplati de la jupe (34), les premières fentes (44) coïncidant l'une avec l'autre, et la seconde fente (46) de stabilisation comprenant une seconde fente (46) à travers le premier côté aplati de la jupe (34) et une seconde fente (46) à travers le second côté aplati de la jupe (34), les secondes fentes (46) coïncidant l'une avec l'autre, avec l'initiateur de déchirure (36) et les première et seconde aides à la préhension (38, 40) qui sont tous entre la première fente (44) de stabilisation et la seconde fente (46) de stabilisation.

14. Produit emballé à cuisson dans l'emballage (48, 56, 62) selon la revendication 1, dans lequel le mélange de polymères incompatibles est présent dans le film (22, 128) en une quantité de 30 à 70 pour cent en poids, de préférence de 40 à 60 pour cent en poids, sur la base du poids total du film.
